(19) **Europäisches Patentamt / European Patent Office / Office européen des brevets**

(11) **EP 4 692 886 A1**

(12) **EUROPEAN PATENT APPLICATION**
published in accordance with Art. 153(4) EPC

(43) Date of publication:
**11.02.2026 Bulletin 2026/07**

(21) Application number: **24861599.9**

(22) Date of filing: **19.06.2024**

(51) International Patent Classification (IPC):
**G02B 13/00** $^{(2006.01)}$  **G02B 17/04** $^{(2006.01)}$
**G03B 17/17** $^{(2021.01)}$

(52) Cooperative Patent Classification (CPC):
**G02B 13/00; G02B 17/04; G03B 17/17**

(86) International application number:
**PCT/CN2024/100072**

(87) International publication number:
**WO 2025/050753 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.09.2023 CN 202311136594**

(71) Applicant: **Huawei Technologies Co., Ltd.
Shenzhen, Guangdong 518129 (CN)**

(72) Inventors:
• **MIYATANI, Sota**
  **Shenzhen, Guangdong 518129 (CN)**
• **TONG, Qing**
  **Shenzhen, Guangdong 518129 (CN)**
• **HIDEMASA, Ozawa**
  **Shenzhen, Guangdong 518129 (CN)**
• **ZHANG, Weifeng**
  **Shenzhen, Guangdong 518129 (CN)**
• **NIU, Yajun**
  **Shenzhen, Guangdong 518129 (CN)**
• **WU, Zhikun**
  **Shenzhen, Guangdong 518129 (CN)**

(74) Representative: **Gill Jennings & Every LLP
The Broadgate Tower
20 Primrose Street
London EC2A 2ES (GB)**

(54) **OPTICAL LENS, CAMERA MODULE AND ELECTRONIC DEVICE**

(57) Embodiments of this application provide an optical lens, a camera module, and an electronic device. The optical lens includes a lens group and an optical folding element located on an image side of the lens group. The lens group includes at least one lens having a positive focal power. The optical folding element includes a first part, a second part, and a third part that are sequentially connected from an object side to the image side. The first part extends in a first direction, the third part extends in a second direction intersecting with the first direction, and a plane in which the first direction and the second direction are located is perpendicular to an optical axis of the lens group. In the optical folding element, an incident surface is located in the first part, a deflection reflection surface is located in the second part and is parallel to the optical axis of the lens group, and an emergent surface is located in the third part. Light is emitted into the optical folding element through the incident surface, and after being subject to at least six reflections in the optical folding element, the light is emitted out of the optical folding element through the emergent surface, where the at least six reflections include one reflection occurring on the deflection reflection surface.

FIG. 3

**Description**

This application claims priority to Chinese Patent Application No. 202311136594.4, filed with the China National Intellectual Property Administration on September 4, 2023 and entitled "OPTICAL LENS, CAMERA MODULE, AND ELECTRONIC DEVICE", which is incorporated herein by reference in its entirety.

**TECHNICAL FIELD**

This application relates to the field of photographing devices, and specifically, to an optical lens, a camera module, and an electronic device.

**BACKGROUND**

Portable devices such as a mobile phone and a tablet are provided with optical lenses, for taking pictures, recording videos, or the like. A long-focus optical lens can greatly improve long-focus photographing experience of a user, and is widely used in a camera module. However, as a focal length of an optical lens increases, a module size of a camera module also increases synchronously. As a result, it is difficult to mount the camera module in a miniaturized electronic device. Therefore, it is necessary to provide an optical lens that can satisfy design requirements of long focus and miniaturization.

**SUMMARY**

Embodiments of this application disclose an optical lens, a camera module, and an electronic device. The optical lens satisfies design requirements of long focus and miniaturization.

According to a first aspect, an implementation of this application provides an optical lens. The optical lens includes a lens group and an optical folding element. The lens group includes at least one lens having a positive focal power. The optical folding element is located on an image side of the lens group. The optical folding element includes a first part, a second part, and a third part that are sequentially connected from an object side to the image side. The first part extends in a first direction, the third part extends in a second direction, a plane in which the first direction and the second direction are located is perpendicular to an optical axis of the lens group, and the second direction intersects with the first direction. The optical folding element includes an incident surface, a deflection reflection surface, and an emergent surface. The incident surface is located in the first part and is disposed facing the lens group. The deflection reflection surface is located in the second part and is parallel to the optical axis of the lens group. The emergent surface is located in the third part. After passing through the lens group, external light is emitted into the optical folding element through the incident surface, and after being subject to at least six reflections in the optical folding element, the external light is emitted out of the optical folding element through the emergent surface, where the at least six reflections include one reflection occurring on the deflection reflection surface.

In this implementation, the optical lens is provided with the optical folding element that is approximately arranged in a plane (specifically, a plane XY) perpendicular to a height direction Z of the optical lens. The optical folding element changes a propagation direction of light emitted out of the lens group, and folds an optical path. A height of the optical folding element is far less than a back focal length of the optical lens, so that heights of the optical lens and the camera module can be reduced, and miniaturization is facilitated.

For example, the height of the optical folding element is a size of the optical folding element in the height direction of the optical lens, the length of the optical folding element is a size of the optical folding element in a length direction of the optical lens, and a width of the optical folding element is a size of the optical folding element in a width direction of the optical lens. A thickness of the optical folding element may be less than the length of the optical folding element. In this case, heights of the optical lens and the camera module are further reduced, and miniaturization is facilitated.

In some examples, the first direction is parallel to the length direction of the optical lens. In this case, the size of the optical folding element in the first direction is the length of the optical folding element. In an implementation of this application, because an extension direction of the optical folding element deflects in the second part, an extension direction (the first direction) of the first part of the optical folding element intersects with an extension direction (the second direction) of the third part, and the optical folding element is structurally bent. As a result, a size of the optical folding element in the first direction is reduced, and a length of the optical folding element in the length direction of the optical lens is reduced, so that module lengths of the optical lens and the camera module can be effectively reduced, and a miniaturization design is facilitated.

In addition, because the extension direction (the first direction) of the first part of the optical folding element intersects with the extension direction (the second direction) of the third part, the optical folding element is structurally bent. Therefore, when a length size of the optical folding element in the length direction Y of the optical lens is limited, the length of the third part may be increased to increase an extension length (specifically, a length of the optical folding element extending from the object side end to the image side end) of the optical folding element, to increase a quantity of optical path folding times and/or an optical path inside the optical folding element, and facilitate a long-focus design of the optical lens. In an implementation of this application, a shape of the optical folding element is designed for the optical lens, and at least six reflections of light occur in the optical folding element, so that the optical folding element can have a long optical path in a case of a small volume, and a long-focus design of the optical lens is facilitated.

It may be understood that the at least six reflections of the light occurring in the optical folding element include one reflection occurring on the deflection reflection surface and at least five reflections occurring on remaining surfaces of the optical folding element. The reflection of the light occurring on the deflection reflection surface is mainly to make the optical path deflect with the structure bending of the optical folding element, so that the light continues to propagate in the optical folding element. The at least five reflections of the light occurring on the remaining surfaces of the optical folding element are mainly used to implement optical path folding, and increase the optical path.

In a possible implementation, a first included angle $\alpha$ is formed between the first direction and the second direction, and the first included angle $\alpha$ satisfies $50°\leq\alpha\leq150°$. In this implementation, a range of the first included angle $\alpha$ is set, so that the length of the optical folding element in the first direction can be significantly shortened, and interference between an incident optical path and an emergent optical path in the optical folding element can be small. In addition, when the lens group, the optical folding element, and the image sensor are compactly arranged, mechanism interference between the lens and the image sensor module can be avoided, and mechanism reliability can be ensured.

In a possible implementation, a first included angle $\alpha$ is formed between the first direction and the second direction, and the first included angle $\alpha$ satisfies $70°\leq\alpha\leq135°$. In this implementation, a range of the first included angle $\alpha$ is set, so that the length of the optical folding element in the first direction can be significantly shortened, and interference between an incident optical path and an emergent optical path in the optical folding element can be small. In addition, when the lens group, the optical folding element, and the image sensor are compactly arranged, mechanism interference between the lens group and the image sensor module can be avoided, and mechanism reliability can be ensured.

In a possible implementation, light emitted out of the lens group is emitted into the optical folding element through the incident surface along the optical axis of the lens group, and an incident optical axis of the light emitted through the incident surface coincides with the optical axis of the lens group. The optical axis of the lens group may intersect with the incident surface at a first position. In an implementation of this application, a center point of the incident surface may be set at the first position.

Light emergent through the emergent surface has an emergent optical axis, and the emergent optical axis may coincide with a vertical center line of a light sensitive surface of the image sensor. The emergent optical axis may be parallel to the optical axis of the lens group. The emergent optical axis intersects with the emergent surface at a third position. In an implementation of this application, a center point of the emergent surface may be set at the third position.

An extension line of the first position on the incident surface in the first direction intersects with the deflection reflection surface at a second position A first spacing S1 is between the first position and the second position, and a second spacing S2 is between the second position and the third position on the emergent surface. The first spacing S1 and the second spacing S2 satisfy: 13 mm$\leq$S1+S2$\leq$47 mm. For example, a value of S1+S2 may be 20 mm, 22 mm, 25 mm, 25.2 mm, 28 mm, 32 mm, 37 mm, 25.2 mm, or 41 mm. In some examples, the first spacing S1 and the second spacing S2 satisfy 17.5 mm$\leq$S1+S2$\leq$42.5 mm.

In this implementation, the first spacing S1 and the second spacing S2 are controlled, so that the optical lens can be in a long-focus range, and can perform long-focus photographing. In addition, the optical lens has a large aperture, and imaging image quality is high.

For example, a third spacing S3 is between the first position P1 and the third position P3 in the first direction.

In some examples, the first spacing S1 between the first position P1 and the second position P2, the second spacing S2 between the second position P2 and the third position P3, and the third spacing S3 between the first position P1 and the third position P3 in the first direction satisfy: S3$\leq$S1, and 50%$\leq$S1/(S1+S2)$\leq$90%, or 50%$\leq$S1/(S1+S2)$\leq$80%. For example, a value of S1/(S1+S2) may be 67%, 75%, 80%, or 85%.

In some other examples, the first spacing S1 between the first position P1 and the second position P2, the second spacing S2 between the second position P2 and the third position P3, and the third spacing S3 between the first position P1 and the third position P3 in the first direction satisfy: S1$\leq$S3, and 50%$\leq$S3/(S1+S2)$\leq$90%, or 50%$\leq$S3/(S1+S2)$\leq$80%. For example, a value of S3/(S1+S2) may be 67%, 75%, 80%, or 85%.

In this implementation, the value of S1/(S1+S2) is set when S3$\leq$S1, and the value of S3/(S1+S2) is set when S1$\leq$S3, so that the length of the optical folding element in the first direction can be reduced, miniaturization designs of the optical lens and the camera module 200 are facilitated, mechanism interference between the lens group and the image sensor module can be avoided, and mechanism reliability is ensured.

In a possible implementation, the optical folding element includes a top surface and a bottom surface that are disposed in parallel, an arrangement direction of the top surface and the bottom surface is parallel to the optical axis of the lens group, the incident surface is located on the top surface, and the emergent surface is located on the top surface or the bottom surface. The deflection reflection surface connects the top surface to the bottom surface. The optical folding element further includes a first reflective surface and a second reflective surface, where the first reflective surface is located in the first part and connects the top surface and the bottom surface, and the second reflective surface is located in the third part and connects the top surface and the bottom surface. After light is emitted into the optical folding element, a first reflection occurs on the first reflective surface, at least three reflections occur on the top surface and the bottom surface, and a last reflection occurs on the second reflective surface.

In this implementation, the lens group and the image sensor are located on a same side of the optical folding element, and the lens group and the image sensor may reuse space in the height direction, so that miniaturization of the camera module is facilitated. It may be understood that, after the light is converged by the lens group, the light is emitted into the optical folding element through the incident surface of the optical folding element. After being subject to six reflections in the optical folding element, the light is emitted out of the optical folding element through the emergent surface, and then is imaged on the image sensor. The optical lens reflects the converged light of the lens group a plurality of times through the optical folding element, to perform optical path folding, so that physical space between the lens group and the image sensor can be shortened, a module size of the optical lens is reduced, and miniaturization is implemented.

In a possible implementation, a second included angle β is formed between the first reflective surface and the incident surface, and the second included angle β satisfies 22°≤β≤40° or 25°≤β≤37°.

In this implementation, the optical lens may control an optical path direction of light emitted into the optical folding element by defining a range of the second included angle, so that at least five folding reflections of the light can occur in the optical folding element, the optical path is effectively increased, long-focus and miniaturization designs are implemented, flare in the optical lens can be reduced, and imaging quality of the optical lens can be improved. If the second included angle is excessively large, a value of the height of the optical folding element is large, and this not conducive to reducing the height of the optical lens. If the second included angle is excessively small, it is difficult for the light to satisfy a requirement of total reflection in the optical folding element, and this is not conducive to light transmission and imaging.

In a possible implementation, a field of view FOV of the optical lens satisfies FOV≤30°, or FOV≤20°.

In this implementation, a value of the field of view FOV of the optical lens is designed, so that at least five folding reflections of light may occur in the optical folding element, long-focus photographing is implemented, length sizes of the optical folding element and the optical lens can be fully compressed, and a miniaturization design is facilitated.

In a possible implementation, an effective focal length EFL of the optical lens satisfies 20 mm≤EFL≤60 mm, or 30 mm≤EFL≤50 mm.

In this implementation, the optical lens uses an architecture of the lens group and the optical folding element. The effective focal length EFL of the optical lens is limited, so that the optical lens can implement expected long-focus photographing. In addition, the effective focal length EFL corresponds to a large back focal length. The back focal length can be implemented by at least five folding reflections of light in the optical folding element, and the length size of the optical folding element is further compressed through one deflection reflection, so that the optical lens can satisfy a requirement of long-focus photographing and a requirement of module miniaturization.

In an implementation of this application, a design of the field of view FOV of the optical mirror, a design of the effective focal length EFL of the optical lens, a design of a size of the image sensor, and a design of a quantity of folding reflection times of the optical folding element are mutually associated and affect each other. A combination design of related parameters can enable an optical system to have a better field of view and a better sensor range, to better implement long-focus and miniaturization, and further have better imaging quality.

In a possible implementation, a total track length TTL of the optical lens and the effective focal length EFL satisfy 0.7≤TTL/EFL≤1.8, or 0.9≤TTL/EFL≤1.5.

In this implementation, the light emitted into the optical lens is reflected a plurality of times by the optical folding element, so that a ratio of the total track length of the optical lens to the effective focal length of the optical lens satisfies a restrictive condition. In this way, the optical lens has a long focal length to implement a good distant-photographing effect, and a miniaturization design of the optical lens can be implemented.

In a possible implementation, a total optical path length PL of the optical folding element and the effective focal length EFL satisfy 0.5≤PL/EFL≤1.5.

In this implementation, a value of PL/EFL, in other words, a ratio of the total optical path length of the optical folding element to the effective focal length, is in a range from 0.5 to 1.5, so that the optical folding element implements folding of the optical path a plurality of times, the optical lens has a long optical path and a short physical length, and a miniaturization design is facilitated. With reference to PL/EFL, the total optical path length that is of the optical folding element and that is suitable for the effective focal length may be designed based on an expected field of view FOV of the optical lens. If PL/EFL is less than 0.5, the total optical path length of the optical folding element is shorter than the effective focal length, and a quantity of optical path parts that are in the optical lens and in which a plurality of reflections do not occur increases. Consequently, an effect of folding an optical path by using the optical folding element to reduce a module size is weakened. If PL/EFL is greater than 1.5, a ratio of the total optical path length of the optical folding element to the effective focal length becomes excessively large, and space required for arranging a lens used to ensure optical performance cannot be ensured. Consequently, expected optical performance cannot be obtained.

In a possible implementation, the lens group includes a first lens closest to the object side, and a focal length of the first lens and the effective focal length of the optical lens satisfy 0.2≤F1/EFL≤0.7, or 0.25≤F1/EFL≤0.5.

In this implementation, a ratio of the focal length F1 of the first lens to the effective focal length EFL of the optical lens is in a range from 0.2 to 0.7, so that a light focusing effect of the first lens is appropriate for the optical lens, and a total optical path length of the lens group and the total optical path length of the optical folding element are both appropriate. This avoids an excessively large module size of the optical lens, and also enables the optical lens to have better optical performance and better imaging quality.

According to a second aspect, an implementation of this application provides a camera module. The camera module includes an image sensor and the optical lens according to any one of the foregoing implementations, where the image sensor is located on an image side of the optical lens.

In this implementation, there are hundreds of thousands to millions of photodiodes on a surface of the image sensor, and the photodiodes generate electric charges when exposed to light. The image sensor converts, by using a photoelectric conversion function of an optoelectronic device, an optical image on a photosensitive surface of the image sensor into an electrical signal that is in a corresponding proportion relationship with the optical image, where the photosensitive surface of the image sensor is disposed facing the optical lens.

In a possible implementation, in a focusing process of the camera module, the lens group, at least one lens in the lens group, or the image sensor moves in a direction parallel to an optical axis of the lens group.

In this implementation, the camera module may implement automatic focusing through movement of the lens group, the lens in the lens group, or the image sensor, to obtain better imaging quality and photographing experience.

In a possible implementation, in an image stabilization process of the camera module, the lens group, the at least one lens in the lens group, or the image sensor moves in a plane perpendicular to the optical axis of the lens group.

In this implementation, the camera module may implement optical image stabilization through movement of the lens group, the lens in the lens group, or the image sensor, to obtain better imaging quality and photographing experience.

According to a third aspect, an implementation of this application provides an electronic device. The electronic device includes an image processor and the camera module according to any one of the foregoing implementations. The image processor is in communication connection to the camera module. The image processor is configured to: obtain image data from the camera module and process the image data.

In this implementation, an optical lens of the electronic device satisfies design requirements of long-focus and miniaturization.


**BRIEF DESCRIPTION OF DRAWINGS**

To describe the technical solutions in embodiments of this application or in the background, the following briefly describes the accompanying drawings for describing embodiments of this application or the background.

FIG. 1 is a diagram of a structure of an electronic device in some embodiments according to an embodiment of this application;

FIG. 2 is a diagram of a cross-sectional structure of the electronic device shown in FIG. 1 cut along A-A;

FIG. 3 is a diagram of a structure of a camera module shown in FIG. 2 in some embodiments;

FIG. 4 is a diagram of a structure of an optical folding element shown in FIG. 3;

FIG. 5A is a top view of the optical folding element shown in FIG. 4 in some embodiments;

FIG. 5B is a top view of the optical folding element shown in FIG. 4 in some other embodiments;

FIG. 5C is a top view of the optical folding element shown in FIG. 4 in some other embodiments;

FIG. 6 is a diagram of an equivalent unfolded optical path of the optical folding element shown in FIG. 4;

FIG. 7A is a diagram of a structure of a camera module shown in FIG. 1 in some other embodiments;

FIG. 7B is a diagram of an equivalent unfolded optical path of an optical folding element of the camera module shown in FIG. 7A;

FIG. 8A is a diagram of an equivalent unfolded optical path of the camera module shown in FIG. 3 in a first embodiment;

FIG. 8B is a diagram of a simulation effect of the camera module shown in FIG. 8A in a possible embodiment;

FIG. 9A is a diagram of an equivalent unfolded optical path of the camera module shown in FIG. 3 in a second embodiment;

FIG. 9B is a diagram of a simulation effect of the camera module shown in FIG. 9A in a possible embodiment;

FIG. 10A is a diagram of an equivalent unfolded optical path of the camera module shown in FIG. 3 in a third embodiment; and

FIG. 10B is a diagram of a simulation effect of the camera module shown in FIG. 10A in a possible embodiment.

## DESCRIPTION OF EMBODIMENTS

For ease of understanding, the following first describes English abbreviations and related technical terms used in embodiments of this application.

A focal power (focal power) is equal to a difference between convergence of an image side light beam and convergence of an object side light beam, and represents a capability of an optical system to refract light.

For a lens or a lens group with a positive focal power, the lens or lens group has a positive focal length, and has an effect of converging light.

For a lens or a lens group with a negative focal power, the lens or lens group has a negative focal length, and has an effect of diverging light.

A focal length (focal length) is a measurement of how strongly the optical system converges or diverges light, and refers to, when a clear image of an infinite scene is formed in a focal plane by using a lens or a lens group, a vertical distance from an optical center of the lens or the lens group to the focal plane. From a practical perspective, the focal length may be understood as a distance from a center of a lens to a plane when an object is at an infinite distance. For a prime lens, a position of an optical center of the prime lens is fixed. For a long-focus lens, a change in an optical center of a lens causes a change in a focal length of the lens.

For an object side surface, with a lens as a boundary, a side on which a photographed object is located is an object side, and a surface of the lens close to the object side is referred to as the object side surface.

For an image side surface, with a lens as a boundary, a side on which an image of a photographed object is located is an image side, and a surface of the lens close to the image side is referred to as the image side surface.

An aperture diaphragm (aperture diaphragm) is an apparatus used to control an amount of light reaching a light-sensitive surface after light pass through a lens, and is usually located in the lens.

An F-number, also referred to as an F number (Fno), is a relative value (a reciprocal of a relative aperture) obtained by dividing a focal length of a lens by an entrance pupil diameter of the lens. A smaller F-number indicates a larger amount of entering light within a same unit time. A larger F-number indicates a smaller depth of field. In this way, background content in photographing is blurred, which is similar to effect of a long-focus lens.

A total track length (total track length, TTL) is a total length from a surface of a lens closest to an object side to an imaging plane.

An imaging plane is a carrier plane that is located on image sides of all lenses in a long-focus lens and on which an image is formed after light sequentially pass through the lenses in the long-focus lens.

An optical axis is an axis that runs vertically through a center of a lens. An optical axis of a lens is an axis that passes through centers of lenses of the lens. When light parallel to the optical axis is emitted into a convex lens, an ideal convex lens converges all the light at one point behind the lens. This point at which all the light converge is a focal point.

The focal point is a point at which parallel light converges after being refracted by a lens or a lens group.

An image focal plane, also referred to as a rear focal plane or a second focal plane, is a flat surface that passes through an image focal point (also referred to as a rear focal point or a second focal point) and that is perpendicular to an optical axis of a system.

A back focal length (BFL), also referred to as a back focal distance (BFD), is a distance from a last optical surface vertex of a system to an image focal point.

An Abbe (Abbe) number, namely, a dispersion coefficient, is a difference ratio of refractive indices of an optical material at different wavelengths, and represents a degree of dispersion of the material.

Field of view (field of view, FOV): In an optical instrument, an included angle, with a lens of the optical instrument as a vertex, including two edges of a maximum range within which an object image of a measured target is visible through the lens is referred to as the field of view. A size of the field of view determines a range of vision of the optical instrument. A larger field of view indicates a broader vision and a smaller optical magnification.

A semi-sensor diagonal ImgH (Image Hight) represents a half of a diagonal length of an effective pixel region on a photosensitive chip, namely, an image height of an imaging plane.

Aberration: A paraxial region of an optical system has the properties of an ideal optical system. Paraxial light emitted from a point on an object intersects with an image plane at one point (namely, a paraxial image point). However, light actually passing through different apertures of a lens can hardly perfectly intersect at one point. Instead, there are deviations from the position of the paraxial image point. These deviations are collectively referred to as aberrations.

An axial chromatic aberration (longitudinal spherical aber) is also referred to as a longitudinal chromatic aberration or a positional chromatic aberration or an axial chromatic aberration. A light beam parallel to an optical axis converges at different positions after passing through a lens. This aberration is referred to as a positional chromatic aberration or an axial chromatic aberration. This is because positions of images formed by the lens for light of different wavelengths are different, so that image focal planes of light of different colors cannot overlap during final imaging, and polychromatic light is scattered to form dispersion.

A distortion (distortion) is a degree at which an image formed by an optical system for an object is distorted relative to the object. A distortion is caused because a height of a point at which principal light with different fields of view intersects with a Gaussian image plane after the principal light passes through the optical system is not equal to an ideal image height due to impact of a diaphragm spherical aberration, and a difference between the two heights is a distortion. Therefore, a distortion only changes an imaging position of an off-axis object point in an ideal plane, so that a shape of an image is distorted, but definition of the image is not affected.

Astigmatism (astigmatism): Because an object point is not on an optical axis of an optical system, a light beam emitted by the object point has an oblique angle to the optical axis. After the light beam is refracted by a lens, convergence points of a meridian pencil and a sagittal pencil are not a same point. In other words, the light beam cannot be focused at one point, and imaging is not clear, resulting in astigmatism. The meridian pencil and the sagittal pencil are names of light beams in two vertical planes in a rotationally symmetrical optical system.

A meridian plane (meridian plane) is a flat surface formed by principal light (principal light beam) of an object point outside an optical axis and the optical axis.

A sagittal plane (sagittal plane) is a flat surface that passes through the principal light (principal light beam) of the object point outside the optical axis and that is perpendicular to the meridian plane.

A curvature of field (curvature of field) is used for indicating a difference in an optical axis direction between a position of the clearest image point in a non-central field of view light passing through an optical lens group and a position of the clearest image point in a central field of view. When a lens has a curvature of field, an intersection of a whole light beam does not coincide with an ideal image point. Although a clear image point can be obtained at each specific point, a whole image plane is a curved surface.

The following describes technical solutions of embodiments in this application with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following, terms such as "first" and "second" are used only for description purposes, and cannot be understood as an indication or implication of relative importance or an implicit indication of a quantity of indicated technical features. Therefore, a feature limited by "first" or "second" may explicitly or implicitly include one or more features.

In addition, in embodiments of this application, a limitation on a relative position relationship is mentioned, for example, parallel or vertical. These limitations are all relative to the current process level, and are not absolutely strict. A small deviation is allowed, for example, approximate parallel or vertical is acceptable. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

Embodiments of this application provide an optical lens, a camera module, and an electronic device. The optical lens includes a lens group and an optical folding element located on an image side of the lens group. The lens group includes at least one lens having a positive focal power. The optical folding element includes a first part, a second part, and a third part that are sequentially connected from an object side to the image side. The first part extends in a first direction, the third part extends in a second direction intersecting with the first direction, and a plane in which the first direction and the second direction are located is perpendicular to an optical axis of the lens group. In the optical folding element, an incident surface is located in the first part, a deflection reflection surface is located in the second part and is parallel to the optical axis of the lens group, and an emergent surface is located in the third part. Light is emitted into the optical folding element through the incident surface, and after being subject to at least six reflections in the optical folding element, the light is emitted out of the optical folding element through the emergent surface, where the at least six reflections include one reflection occurring on the deflection reflection surface. The optical lens in embodiments of this application is structurally bent by using the optical folding element, to better satisfy a long-focus photographing requirement and a module miniaturization requirement.

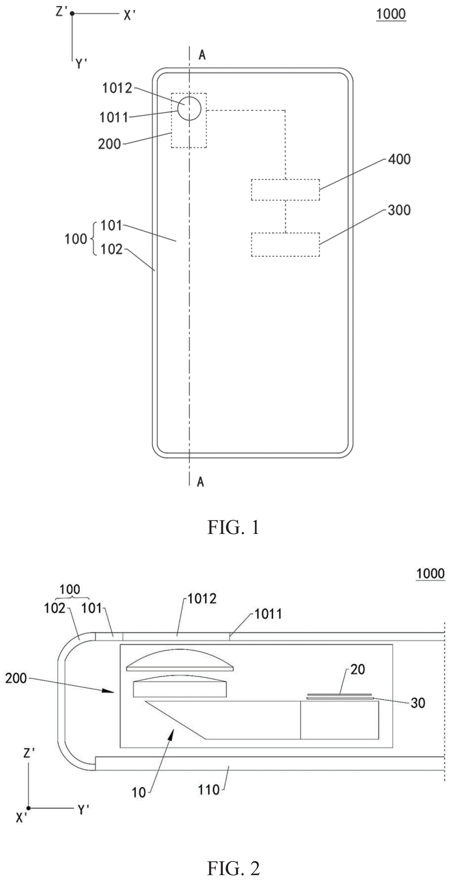

Refer to FIG. 1 and FIG. 2. FIG. 1 is a diagram of a structure of an electronic device according to an embodiment of this application in some embodiments. FIG. 2 is a diagram of a cross-sectional structure of the electronic device shown in FIG. 1 cut along A-A.

In some embodiments, an electronic device 1000 may be a mobile phone, a tablet computer, a laptop computer, a wearable device, a camera, or another form of device that has a photographing or video shooting function. In this embodiment of this application, an example in which the electronic device 1000 is a mobile phone is used for description.

For example, the electronic device 1000 may include a housing 100, a display 110, a camera module 200, and an image processor 300. The housing 100 may include a rear cover 101 and a side frame 102. The rear cover 101 and the side frame 102 may be of an integrally formed structure, or may be assembled to form an integrated structure. The display 110 and the rear cover 101 are respectively mounted on two sides of the side frame 102, which jointly encloses an inner cavity of the entire device, to mount the camera module 200, the image processor 300, or another mechanical part.

The electronic device 1000 may have a width direction X', a length direction Y', and a thickness direction Z'. The length direction Y' is perpendicular to the width direction X', and the thickness direction Z' is perpendicular to the width direction X' and the length direction Y'. The display 110 and the rear cover 101 may be arranged opposite to each other in the thickness direction Z' of the electronic device 1000. In this case, the rear cover 101 may be perpendicular to the thickness direction Z' of the electronic device 1000.

For example, the camera module 200 is mounted in the housing 100, and a light incident side of the camera module 200 may be disposed facing the rear cover 101, to serve as a rear-facing camera of the electronic device 1000. A hole 1011 may be disposed on the rear cover 101, and the camera module 200 collects light outside the electronic device 1000 through the hole 1011 on the rear cover 101, to implement picture or video shooting. For example, the rear cover 101 may include a transparent lens 1012, and the transparent lens 1012 is mounted in the hole 1011 of the rear cover 101, to allow the light to pass through, and can be dustproof and waterproof. In some other embodiments, the light incident side of the camera module 200 may face a side on which the display 110 is located, to serve as a front-facing camera of the electronic device 1000. Both the front-facing camera and the rear-facing camera may be used to take selfies, and may also be used by a photographer to photograph another object.

It may be understood that a mounting position of the camera module 200 of the electronic device 1000 in the embodiment shown in FIG. 1 is merely an example, and the mounting position of the camera module 200 is not strictly limited in this application. In some other embodiments, the camera module 200 may alternatively be mounted at another position of the electronic device 1000. For example, the camera module 200 may be mounted in the middle or the upper right corner of an upper part of the back of the electronic device 1000. In some other embodiments, the electronic device 1000 may include a terminal body and an auxiliary component that can rotate, move, or disassemble relative to the terminal body, and the camera module 200 may alternatively be disposed on the auxiliary component.

For example, the display is fastened to the housing 100, and the display is configured to display an image, to satisfy a use requirement of a user. The display may include a display layer and a touch layer covering the display layer. The touch layer may be used by the user to perform a touch operation. The touch layer may be a transparent glass cover, plastic, or another material with good light transmittance. The display layer may be a liquid crystal display, an organic light-emitting diode display, or the like. The display layer may include a display area and a non-display area. The non-display area is located on a side of the display area, or is disposed around a periphery of the display area. In some electronic devices, the non-display area may not be disposed

For example, the image processor 300 is in communication connection to the camera module 200, and the image processor 300 is configured to: obtain image data from the camera module 200 and process the image data. The communication connection between the camera module 200 and the image processor 300 may include electrical connection like cable connection for performing data transmission, or may include coupling or the like for implementing data transmission. It may be understood that the camera module 200 may alternatively be in communication connection to the image processor 300 in another manner in which data transmission can be implemented.

The image processor 300 may include a plurality of processing modules, and may run to convert an original image signal captured by the camera module 200, to form image information. Processed information is transmitted to a display module of the display, and an image or a picture is displayed on the display. The image processor 300 may be an image processing chip or a digital signal processing chip, and is configured to: adjust a color of the image, perform noise reduction on the image, and the like, to further improve image quality.

In some embodiments, the electronic device 1000 may further include an analog-to-digital converter 400. The analog-to-digital converter 400 is connected between the camera module 200 and the image processor 300. The analog-to-digital converter 400 is configured to: convert, into a digital image signal, a signal generated by the camera module 200 and transmit the digital image signal to the image processor 300.

In some embodiments, the electronic device 1000 may include a memory. The memory is in communication connection to the image processor 300. After processing the digital image signal, the image processor 300 transmits an image to the memory, so that when the image needs to be viewed subsequently, the image can be searched for in the memory at any time and displayed on the display.

In some embodiments, the image processor 300 may further compress a processed digital image signal, and then stores a compressed digital image signal in the memory, to save memory space.

It may be understood that there may be one or at least two camera modules 200. When there is one camera module 200, the camera module 200 may be used for the front-facing camera, or may be used for the rear-facing camera. When there are at least two camera modules 200, the at least two camera modules 200 may be cameras that can satisfy different photographing requirements, such as a long-focus camera module and a wide-angle camera module. This is not limited in this application.

In this embodiment of this application, a working principle of the camera module 200 in the electronic device 1000 may be as follows: Light reflected by a photographed scene is emitted into the camera module 200, to generate an optical image and the optical image is projected onto a surface of the image sensor. The image sensor converts the optical image into an electrical signal, namely, an analog image signal, and transmits the analog image signal obtained through conversion to the analog-to-digital converter 400, so that the analog-to-digital converter 400 converts the analog image signal into a digital image signal and sends the digital image signal to the image processor 300. The image processor 300 may run to convert the original image signal captured by the camera module 200, to form the image information. The processed information is transmitted to the display module of the display 110, and the image or the picture is displayed on the display 110. Alternatively, the image processor 300 may process the digital image signal, and then transmit the image to the memory, so that when the image needs to be viewed subsequently, the image can be searched for in the memory at any time and displayed on the display 110.

FIG. 1 is merely the diagram of the structure of the electronic device 1000. Sizes, quantities, positions, and the like of the camera module 200, the image processor 300, the analog-to-digital converter 400, and the memory shown in FIG. 1 are merely examples, and may be adjusted based on a requirement. This is not limited in this application.

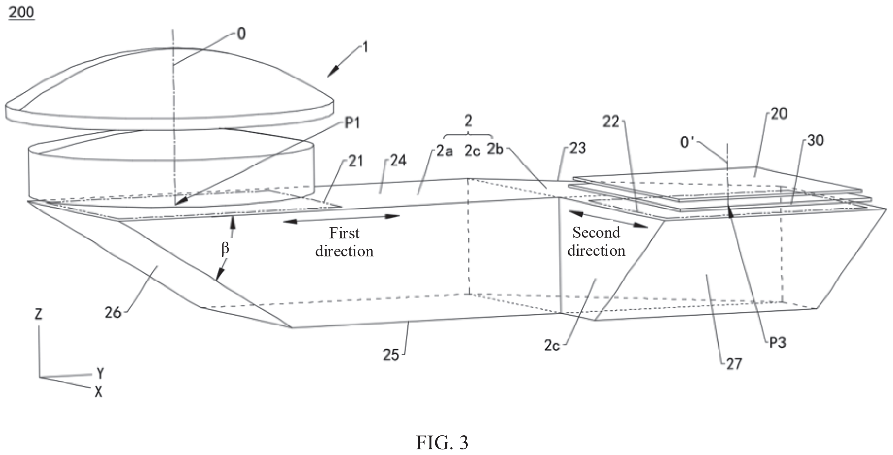

Refer to FIG. 2 and FIG. 3. FIG. 3 is a diagram of a structure of a camera module 200 shown in FIG. 2 in some embodiments.

In some embodiments, the camera module 200 may include an optical lens 10, an image sensor 20, and a light filter 30. After being refracted by the optical lens 10, light reflected by a photographed object passes through the light filter 30, and is emitted into the image sensor 20 for imaging.

The image sensor 20 may be located on an image side of the optical lens 10. The image sensor 20 is a semiconductor chip, and may alternatively be referred to as a photosensitive chip. There are hundreds of thousands to millions of photodiodes on a surface of the image sensor 20, and the photodiodes generate electric charges when exposed to light. The image sensor 20 converts, by using a photoelectric conversion function of an optoelectronic device, an optical image on a photosensitive surface of the image sensor into an electrical signal that is in a corresponding proportion relationship with the optical image, where the photosensitive surface of the image sensor 20 is disposed facing the optical lens 10. The image sensor 20 may be a charge coupled device, a complementary metal-oxide-semiconductor, a phototransistor, a thin film transistor, or the like.

For example, the camera module 200 may further include a driving piece (not shown in the figure). The driving piece is configured to drive the lens 21 and/or the image sensor 20 to move, to implement automatic focus and/or optical image stabilization. The driving piece may be a motor. For example, the driving piece may be a voice coil motor or a shape memory alloy motor.

For example, the light filter 30 may be located between the optical lens 10 and the image sensor 20. Light passing through the optical lens 10 is emitted into the light filter 30, and is filtered by the light filter 30 to form an image on the image sensor 20. For example, the light filter 30 may be an infrared light filter. The light filter 30 may eliminate light that is of an unnecessary band and that is projected onto the image sensor 20, and prevent the image sensor 20 from generating a false color or a ripple, to improve effective resolution and color reproduction of the image sensor 20.

In some embodiments, a light filter mechanical part may alternatively be removed, but surface processing or material processing is performed on at least one optical element of the optical lens 10, to implement light filtering. A specific embodiment of a mechanical part or structure configured to implement light filtering is not strictly limited in this application.

For example, the optical lens 10 may have a width direction X, a length direction Y, and a height direction Z, where the length direction Y may be perpendicular to the width direction X, and the height direction Z may be perpendicular to the width direction X and the length direction Y. A width direction, a length direction, and a height direction of the camera module 200 may be in a one-to-one correspondence with the width direction X, the length direction Y, and the height direction Z of the optical lens 10.

When the camera module 200 is mounted in the electronic device 1000, the height direction Z of the optical lens 10 is parallel to the thickness direction Z' of the electronic device 1000. In this case, the height direction Z of the optical lens 10 is in a mutually perpendicular position relationship with the rear cover 101 and the display 110 of the electronic device 1000.

The following describes an implementation solution of the optical lens 10 shown in FIG. 3 by using an example.

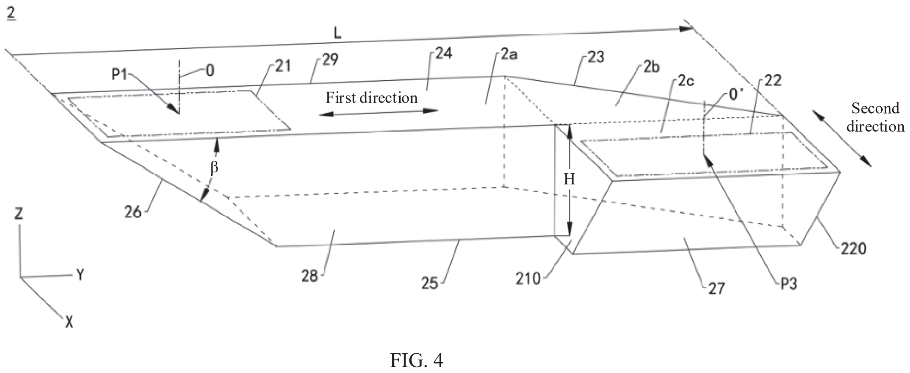

Refer to FIG. 3 and FIG. 4. FIG. 4 is a diagram of a structure of an optical folding element 2 shown in FIG. 3.

In some embodiments, the optical lens 10 includes a lens group 1 and an optical folding element 2, and the optical folding element 2 is located on an image side of the lens group 1.

For example, the lens group 1 has an optical axis O, and the height direction Z of the optical lens 10 is parallel to the optical axis O of the lens group 1. The lens group 1 includes at least one lens having a positive focal power. In some examples, the lens group 1 may include a plurality of lenses, for example, two to four lenses. The plurality of lenses may be arranged along the optical axis O of the lens group 1, and a focal power of at least one of the plurality of lenses is positive.

For example, the optical folding element 2 is configured to fold an optical path, to shorten a physical space dimension between the lens group 1 and the image sensor 20. In some examples, the optical folding element 2 may be a prism. The optical folding element 2 may be approximately of a strip-shaped structure. For example, the optical folding element 2 may have an incident surface 21 and an emergent surface 22. The incident surface 21 may be located at an object side end that is of the optical folding element 2 and that is close to an object side, and the emergent surface 22 may be located at an image side end that is of the optical folding element 2 and that is close to the image side. Light is emitted into the optical folding element 2 through the incident surface 21, and is propagated from the object side end to the image side end in the optical folding element 2. The light is subject to a plurality of reflections during propagation, and then the light is emitted out of the optical folding element 2 through the emergent surface 22. The object side end of the optical folding element 2 is disposed corresponding to the lens group 1, and the incident surface 21 is disposed facing the lens group 1, and is configured to receive light emitted out of the lens group 1. The image sensor 20 is disposed corresponding to the image side end of the optical folding element 2, and the image sensor 20 is disposed facing the emergent surface 22, so that light emitted out of the optical folding element 2 can be imaged on the image sensor 20.

In this embodiment of this application, after being converged by the lens group 1, the light is emitted into the optical folding element 2 through the incident surface 21 of the optical folding element 2. After being subject to a plurality of reflections in the optical folding element 2, the light is emitted out of the optical folding element 2 through the emergent surface 22, and then is imaged on the image sensor 20. The optical lens 10 reflects the converged light of the lens group 1 a plurality of times through the optical folding element 2, to perform optical path folding, so that physical space between the lens group 1 and the image sensor 20 can be shortened, a module size of the optical lens 10 is reduced, and miniaturization is implemented.

It may be understood that light emitted out of the lens group 1 is emitted into the optical folding element 2 through the incident surface 21 along the optical axis O of the lens group 1, and an incident optical axis of the light emitted through the incident surface 21 coincides with the optical axis O of the lens group 1. The optical axis O of the lens group 1 may intersect with the incident surface at a first position P1. In an embodiment of this application, a center point of the incident surface 21 may be set at the first position P1.

Light emergent through the emergent surface 22 has an emergent optical axis O', and the emergent optical axis O' may coincide with a vertical center line of a light sensitive surface of the image sensor 20. The emergent optical axis O' may be parallel to the optical axis O of the lens group 1. The emergent optical axis O' intersects with the emergent surface 22 at a third position P3. In an embodiment of this application, a center point of the emergent surface 22 may be set at the third position P3.

In some embodiments, the optical folding element 2 may include a first part 2a, a second part 2b, and a third part 2c that are sequentially connected from the object side to the image side. In this case, the light emitted into the optical folding element 2 is emitted outside after sequentially passing through the first part 2a, the second part 2b, and the third part 2c. The first part 2a may extend in a first direction, and the third part 2c may extend in a second direction. A plane in which the first direction and the second direction are located is perpendicular to the optical axis O of the lens group 1, and the second direction intersects with the first direction. The plane in which the first direction and the second direction are located is a plane in which the first direction and the second direction are coplanar. The plane in which the first direction and the second direction are located is perpendicular to the optical axis O of the lens group 1, in other words, perpendicular to the height direction Z of the optical lens 10. The optical folding element 2 is approximately arranged on a plane (namely, a plane XY) perpendicular to the height direction Z of the optical lens 10.

For example, the incident surface 21 of the optical folding element 2 is located in the first part 2a, and the emergent surface 22 is located in the third part 2c. The optical folding element 2 further includes a deflection reflection surface 23. The deflection reflection surface 23 is located in the second part 2b and is parallel to the optical axis O of the lens group 1. After passing through the lens group 1, external light is emitted into the optical folding element 2 through the incident surface 21, and after being subject to at least six reflections in the optical folding element 2, the external light is emitted out of the optical folding element 2 through the emergent surface 22, where the at least six reflections include one reflection occurring on the deflection reflection surface 23.

In this embodiment, the optical lens 10 is provided with the optical folding element 2 that is approximately arranged in the plane (specifically, a plane XY) perpendicular to the height direction Z of the optical lens 10. The optical folding element 2 changes a propagation direction of light emitted out of the lens group 1, and folds an optical path. A height of the optical folding element 2 is far less than a back focal length of the optical lens 10, so that heights of the optical lens 10 and the camera module can be reduced, and miniaturization is facilitated.

For example, the height H of the optical folding element 2 is a size of the optical folding element 2 in the height direction Z of the optical lens 10, the length L of the optical folding element 2 is a size of the optical folding element 2 in the length direction Y of the optical lens 10, and a width of the optical folding element 2 is a size of the optical folding element 2 in the width direction X of the optical lens 10. A thickness of the optical folding element 2 may be less than the length of the optical folding element 2. In this case, heights of the optical lens 10 and the camera module 200 are further reduced, and miniaturization is facilitated.

In some examples, the first direction is parallel to the length direction Y of the optical lens 10. In this case, the size of the optical folding element 2 in the first direction is the length L of the optical folding element 2. In an embodiment of this application, because an extension direction of the optical folding element 2 deflects in the second part 2b, an extension direction (the first direction) of the first part 2a of the optical folding element 2 intersects with an extension direction (the second direction) of the third part 2c, and the optical folding element 2 is structurally bent. As a result, a size of the optical folding element 2 in the first direction is reduced, and a length L of the optical folding element 2 in the length direction Y of the optical lens 10 is reduced, so that module lengths of the optical lens 10 and the camera module 200 can be effectively reduced, and a miniaturization design is facilitated.

In addition, because the extension direction (the first direction) of the first part 2a of the optical folding element 2 intersects with the extension direction (the second direction) of the third part 2c, the optical folding element 2 is structurally bent. Therefore, when a length size of the optical folding element 2 in the length direction Y of the optical lens 10 is limited, the length of the third part 2c may be increased to increase an extension length (specifically, a length of the optical folding element 2 extending from the object side end to the image side end) of the optical folding element 2, to increase a quantity of optical path folding times and/or an optical path inside the optical folding element 2, and facilitate a long-focus design of the optical lens 10. In an embodiment of this application, a shape of the optical folding element 2 is designed for the optical lens 10, and at least six reflections of the light occur in the optical folding element 2, so that the optical folding element 2 can have a long optical path in a case of a small volume, and a long-focus design of the optical lens 10 is facilitated.

It may be understood that the at least six reflections of the light occurring in the optical folding element 2 include one reflection occurring on the deflection reflection surface 23 and at least five reflections occurring on remaining surfaces of the optical folding element 2. The reflection of the light occurring on the deflection reflection surface 23 is mainly to make the optical path deflect with the bending of the structure of the optical folding element 2, so that the light continues to propagate in the optical folding element 2. The at least five reflections of the light occurring on the remaining surfaces of the optical folding element 2 are mainly used to implement optical path folding, to increase the optical path.

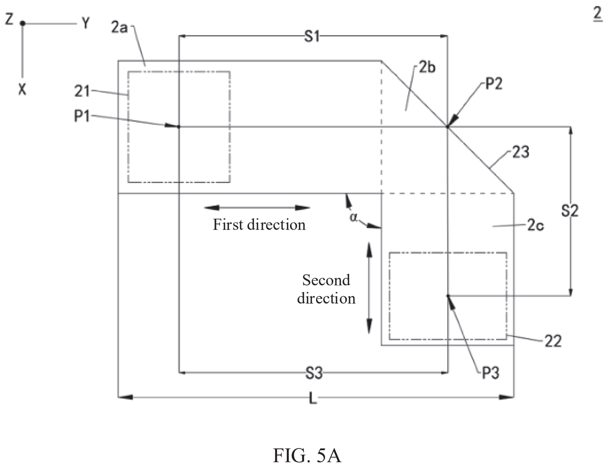

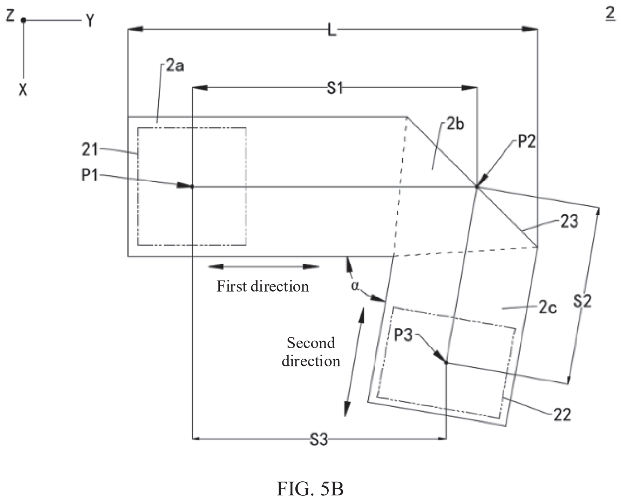

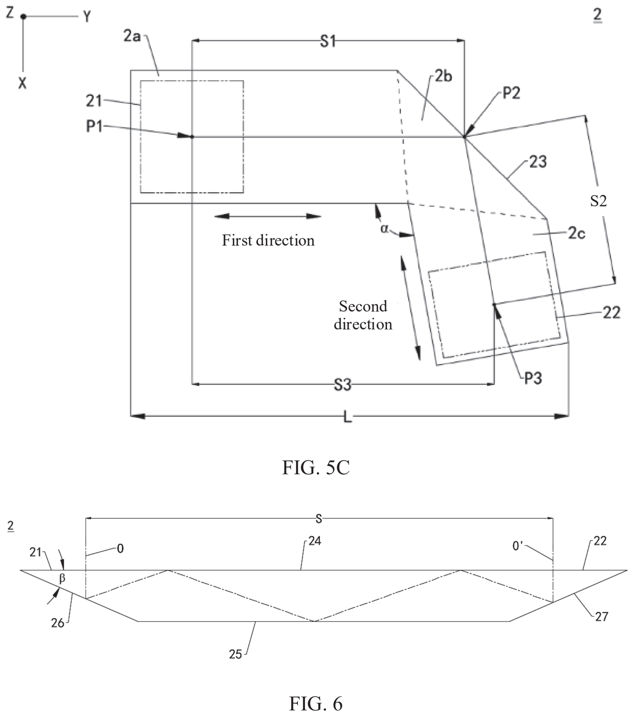

Refer to FIG. 5A to FIG. 5C. FIG. 5A is a top view of the optical folding element 2 shown in FIG. 4 in some embodiments, FIG. 5B is a top view of the optical folding element 2 shown in FIG. 4 in some other embodiments, and FIG. 5C is a top view of the optical folding element 2 shown in FIG. 4 in some other embodiments.

In some embodiments, a first included angle $\alpha$ is formed between the first direction and the second direction, and the first included angle $\alpha$ satisfies $50° \leq \alpha \leq 150°$. For example, a value of the first included angle $\alpha$ may be 60°, 70°, 82°, 85°, 90°, 95°, 110°, or 130°. In some examples, the first included angle $\alpha$ satisfies: $70° \leq \alpha \leq 135°$. In some examples, $70° \leq \alpha \leq 90°$.

In this embodiment, a range of the first included angle $\alpha$ is set, so that the length L of the optical folding element 2 in the first direction can be significantly shortened, and interference between an incident optical path and an emergent optical path in the optical folding element 2 can be small. In addition, when the lens group 1, the optical folding element 2, and the image sensor 20 are compactly arranged, mechanism interference between the lens group 1 and the image sensor 20 module can be avoided, and mechanism reliability can be ensured.

As shown in FIG. 5A, when the first included angle $\alpha$ is 90°, the second direction is perpendicular to the first direction, and the third part 2c is vertically bent relative to the first part 2a. In this case, the length L of the optical folding element 2 in the first direction includes a length of the first part 2a in the first direction and a length of the second part 2b in the first direction.

As shown in FIG. 5B, when the first included angle $\alpha$ is less than 90°, the third part 2c deviates towards the first part 2a when being bent relative to the first part 2a, the length L of the optical folding element 2 in the first direction includes a length of the first part 2a in the first direction and a length of the second part 2b in the first direction.

As shown in FIG. 5C, when the first included angle $\alpha$ is greater than 90°, the third part 2c slightly deviates from the first part 2a when being bent relative to the first part 2a, the length L of the optical folding element 2 in the first direction includes a length of the first part 2a in the first direction, a length of the second part 2b in the first direction, and a length of a part that is of the third part 2c and that protrudes relative to the second part 2b in the first direction.

In this embodiment of this application, when a specific shape of the optical folding element 2 is designed for the optical lens 10, an expected extension length of the optical folding element 2, and sizes of the lens group 1 and the image sensor 20 and a relative position relationship between the lens group 1 and the image sensor 20 may be considered, to satisfy both a miniaturization requirement and an appropriate layout requirement between components.

In addition, in this embodiment of this application, the optical folding element 2 is approximately of an L-shaped strip structure, is easy to process, and has a high yield rate. In some examples, the optical folding element 2 may be an integrally formed mechanical part. In some other examples, the optical folding element 2 may alternatively be an integrated structure assembled and formed by using several mechanical parts. For example, the first part 2a and the second part 2b may be designed as an integrally formed mechanical part, and the third part 2c is bonded to the second part 2b. Alternatively, the second part 2b and the third part 2c are designed as an integrally formed mechanical part, and the first part 2a is bonded to the second part 2b. Alternatively, a part of the second part 2b is integrally formed with the first part 2a, the other part of the second part 2b is integrally formed with the third part 2c, and the two integrally formed mechanical parts are bonded. Alternatively, the first part 2a, the second part 2b, and the third part 2c are sequentially bonded together. A forming manner and a structure of the optical folding element 2 are not strictly limited in embodiments of this application.

In some embodiments, as shown in FIG. 5A to FIG. 5C, an extension line of the first position P1 on the incident surface 21 in the first direction intersects with the deflection reflection surface 23 at a second position P2. A first spacing S1 is between the first position P1 and the second position P2, and a second spacing S2 is between the second position P2 and the third position P3 on the emergent surface 22. The first spacing S1 and the second spacing S2 satisfy: 13 mm $\leq$ S1+S2 $\leq$ 47 mm. For example, a value of S1+S2 may be 20 mm, 22 mm, 25 mm, 25.2 mm, 28 mm, 32 mm, 37 mm, 25.2 mm, or 41 mm. In some examples, the first spacing S1 and the second spacing S2 satisfy 17.5 mm≤S1+S2≤42.5 mm.

In this embodiment, the first spacing S1 and the second spacing S2 are controlled, so that the optical lens 10 can be in a long-focus range, and can perform long-focus photographing. In addition, the optical lens 10 has a large aperture, and imaging image quality is high.

For example, a third spacing S3 is between the first position P1 and the third position P3 in the first direction.

In some examples, as shown in FIG. 5A and FIG. 5B, the first spacing S1 between the first position P1 and the second position P2, the second spacing S2 between the second position P2 and the third position P3, and the third spacing S3 between the first position P1 and the third position P3 in the first direction satisfy: S3≤S1, and 50%≤S1/(S1+S2)≤90%, or 50%≤S1/(S1+S2)≤80%. For example, a value of S1/(S1+S2) may be 67%, 75%, 80%, or 85%.

In some other examples, as shown in FIG. 5C, the first spacing S1 between the first position P1 and the second position P2, the second spacing S2 between the second position P2 and the third position P3, and the third spacing S3 between the first position P1 and the third position P3 in the first direction satisfy: S1≤S3, and 50%≤S3/(S1+S2)≤90%, or 50%≤S3/(S1+S2)≤80%. For example, a value of S3/(S1+S2) may be 67%, 75%, 80%, or 85%.

In this embodiment, the value of S1/(S1+S2) is set when S3≤S1, and the value of S3/(S1+S2) is set when S1≤S3, so that the length of the optical folding element 2 in the first direction can be reduced, miniaturization designs of the optical lens 10 and the camera module 200 are facilitated, mechanism interference between the lens group 1 and the image sensor 20 module can be avoided, and mechanism reliability is ensured.

Refer to FIG. 3, FIG. 4, and FIG. 6. FIG. 6 is a diagram of an equivalent unfolded optical path of the optical folding element 2 shown in FIG. 4. In the equivalent optical path, a spacing S between the optical axis O of the lens group 1 and the emergent optical axis O' satisfies S=S1+S2.

In some embodiments, the optical folding element 2 may include a top surface 24 and a bottom surface 25 that are disposed in parallel, and an arrangement direction of the top surface 24 and the bottom surface 25 is parallel to the optical axis O of the lens group 1. In this case, the top surface 24 and the bottom surface 25 of the optical folding element 2 are arranged in the height direction of the long-focus lens, and a spacing between the top surface 24 and the bottom surface 25 is the height H of the optical folding element 2. For example, the incident surface 21 is located on the top surface 24, and the emergent surface 22 is located on the top surface 24. In this case, the lens group 1 and the image sensor 20 are located on a same side of the optical folding element 2, and the lens group 1 and the image sensor 20 may reuse space in the height direction, so that miniaturization of the camera module 200 is facilitated.

The deflection reflection surface 23 connects the top surface 24 to the bottom surface 25. The deflection reflection surface 23 is perpendicular to the top surface 24. The optical folding element 2 further includes a first reflective surface 26 and a second reflective surface 27, where the first reflective surface 26 is located in the first part 2a and connects the top surface 24 to the bottom surface 25, and the second reflective surface 27 is located in the third part 2c and connects the top surface 24 to the bottom surface 25. After light is emitted into the optical folding element 2, a first reflection occurs on the first reflective surface 26, at least three reflections occur on the top surface 24 and the bottom surface 25, a reflection occurs on the deflection reflection surface 23, and a last reflection occurs on the second reflective surface 27. In this case, at least six reflections of the light occur in the optical folding element 2.

The reflection occurring on the deflection reflection surface 23 may occur between one reflection occurring on the top surface 24 and one reflection occurring on the bottom surface 25. For example, the at least six reflections of the light occurring in the optical folding element 2 may further include: a second reflection occurring on the top surface 24, a third reflection occurring on the bottom surface 25, a fourth reflection occurring on the deflection reflection surface 23, and a fifth reflection occurring on the top surface 24; or a second reflection occurring on the top surface 24, a third reflection occurring on the deflection reflection surface 23, a fourth reflection occurring on the bottom surface 25, and a fifth reflection occurring on the top surface 24. In this case, a position of the deflection reflection surface 23 is approximately disposed in a middle area of an optical path of the optical folding element 2, so that a length size of the optical folding element 2 can be effectively reduced.

In FIG. 6 and the following accompanying drawings of this application, in a diagram of the equivalent unfolded optical path of the optical folding element 2, reflections of light on the first reflective surface 26, the second reflective surface 27, the top surface 24, and the bottom surface 25 are mainly presented, and a reflection of the light on the deflection reflection surface 23 is not presented.

In some embodiments, the optical folding element 2 may further include a first side surface 28 and a second side surface 29. The first side surface 28 and the second side surface 29 are located in the first part 2a. The first side surface 28 and the second side surface 29 are disposed opposite to each other, and are both connected to the top surface 24, the bottom surface 25, and the first reflective surface 26. An area in which the top surface 24 is located in the first part 2a, an area in which the bottom surface 25 is located in the first part 2a, the first side surface 28, and the second side surface 29 are all parallel to the extension direction of the first part 2a, specifically, parallel to the first direction. In some examples, the first side surface 28 and the second side surface 29 may be disposed in parallel. In this case, a shape of a cross section of the first part 2a in a direction perpendicular to the first direction is a rectangle. In some other examples, an included angle may also be formed between the first side surface 28 and the second side surface 29. In this case, a shape of a cross section of the first part 2a in the direction perpendicular to the first direction may be a trapezoid. In some examples, the second side surface 29 may be further connected to the deflection reflection surface 23.

In some embodiments, the optical folding element 2 may further include a third side surface 210 and a fourth side surface 220. The third side surface 210 and the fourth side surface 220 are located in the third part 2c. The third side surface 210 and the fourth side surface 220 are disposed opposite to each other, and are both connected to the top surface 24, the bottom surface 25, and the second reflective surface 27. An area in which the top surface 24 is located in the third part 2c, an area in which the bottom surface 25 is located in the third part 2c, the third side surface 210, and the fourth side surface 220 are all parallel to the extension direction of the third part 2c, specifically, parallel to the second direction. In some examples, the third side surface 210 and the fourth side surface 220 may be disposed in parallel. In this case, a shape of a cross section of the third part 2c in a direction perpendicular to the second direction is a rectangle. In some other examples, an included angle may also be formed between the third side surface 210 and the fourth side surface 220. In this case, a shape of a cross section of the third part 2c in the direction perpendicular to the second direction may be a trapezoid. In some examples, the fourth side surface 220 may be further connected to the deflection reflection surface 23.

In some embodiments, the second part 2b may be in a triangular prism shape. In some other embodiments, the second part 2b may alternatively be a trapezoidal cylinder or a cylinder in another shape. This is not strictly limited in embodiments of this application.

In the following, for ease of description, a reflection of light on the deflection reflection surface 23 of the optical folding element 2 is referred to as a deflection reflection for short, and a reflection of the light on another surface (for example, the first reflective surface 26, the second reflective surface 27, the top surface 24, or the bottom surface 25) of the optical folding element 2 is referred to as a folding reflection for short. In other words, one deflection reflection and at least five folding reflections of the light occur in the optical folding element 2.

In some embodiments, a second included angle $\beta$ is formed between the first reflective surface 26 and the incident surface 21, and the second included angle $\beta$ satisfies: $22° \leq \beta \leq 40°$. For example, a value of the first included angle $\alpha$ may be $24°$, $28°$, $30°$, $31°$, $33°$, $35°$, or $36.5°$. In some examples, the second included angle $\beta$ satisfies: $25° \leq \beta \leq 37°$.

In this embodiment, the optical lens 10 may control an optical path direction of light emitted into the optical folding element 2 by defining a range of the second included angle $\beta$, so that at least five folding reflections of the light can occur in the optical folding element 2, the optical path is effectively increased, long-focus and miniaturization designs are implemented, flare in the optical lens 10 can be reduced, and imaging quality of the optical lens 10 can be improved. If the second included angle $\beta$ is excessively large, a value of the height H of the optical folding element 2 is large, and this not conducive to reducing the height of the optical lens 10. If the second included angle $\beta$ is excessively small, it is difficult for the light to satisfy a requirement of total reflection in the optical folding element 2, and this is not conducive to light transmission and imaging.

In some embodiments, an included angle between the second reflective surface 27 and the emergent surface 22 may be equal to the second included angle $\beta$.

In some embodiments, a field of view FOV of the optical lens 10 may satisfy: $FOV \leq 30°$. For example, a value of the field of view FOV may be $9°$, $10.2°$, $11°$, $12°$, $14°$, or $16°$. In some examples, the field of view FOV may satisfy: $FOV \leq 20°$.

In this embodiment, the value of the field of view FOV of the optical lens 10 is designed, so that at least five folding reflections of light may occur in the optical folding element 2, long-focus photographing is implemented, length sizes of the optical folding element 2 and the optical lens 10 can be fully compressed, and a miniaturization design is facilitated.

In some embodiments, an effective focal length EFL of the optical lens 10 may satisfy $20 \text{ mm} \leq EFL \leq 60 \text{ mm}$. For example, a value of the effective focal length EFL may be $28 \text{ mm}$, $32 \text{ mm}$, $33 \text{ mm}$, $35 \text{ mm}$, $41 \text{ mm}$, or $43 \text{ mm}$. In some examples, the effective focal length EFL may satisfy: $30 \text{ mm} \leq EFL \leq 50 \text{ mm}$.

In this embodiment, the optical lens 10 uses an architecture of the lens group 1 and the optical folding element 2. The effective focal length EFL of the optical lens 10 is limited, so that the optical lens 10 can implement expected long-focus photographing. In addition, the effective focal length EFL corresponds to a large back focal length. The back focal length can be implemented by at least five folding reflections of light in the optical folding element 2, and the length of the optical folding element 2 is further compressed through one deflection reflection, so that the optical lens 10 can satisfy a requirement of long-focus photographing and a requirement of module miniaturization.

In an embodiment of this application, a design of the field of view FOV of the optical lens 10, a design of the effective focal length EFL of the optical lens 10, a design of a size of the image sensor 20, and a design of a quantity of folding reflection times of the optical folding element 2 are mutually associated and affect each other. A combination design of related parameters can enable an optical system to have a better field of view and a better sensor range, to better implement long-focus and miniaturization, and further have better imaging quality. A semi-sensor diagonal Y of the image sensor 20 corresponds to an image height, and the image height $= EFL \times \tan(FOV/2)$.

In some embodiments, a total track length TTL of the optical lens 10 and the effective focal length EFL may satisfy $0.7 \leq TTL/EFL \leq 1.8$. For example, a value of TTL/EFL may be $0.8$, $1.0$, $1.1$, $1.2$, $1.3$, $1.4$, or $1.6$. In some examples, TTL/EFL may satisfy: $0.9 \leq TTL/EFL \leq 1.5$.

In this embodiment, the light emitted into the optical lens 10 is reflected a plurality of times by the optical folding element 2, so that a ratio of the total track length of the optical lens 10 to the effective focal length of the optical lens 10 satisfies a restrictive condition. In this way, the optical lens 10 has a long focal length to implement a good distant-photographing effect, and a miniaturization design of the optical lens 10 can be implemented.

In some embodiments, a total optical path length PL of the optical folding element 2 and the effective focal length EFL satisfy 0.5≤PL/EFL≤1.5. For example, a value of PL/EFL may be 0.8, 0.9, 1.0, 1.1, or 1.2. In some examples, the value of PL/EFL may satisfy: 0.7≤PL/EFL≤1.3.

In this embodiment, a value of PL/EFL, specifically, a ratio of the total optical path length PL of the optical folding element 2 to the effective focal length EFL, is in a range from 0.5 to 1.5, so that the optical folding element 2 implements folding of the optical path a plurality of times, the optical lens 10 has a long optical path and a short physical length, and a miniaturization design is facilitated. With reference to PL/EFL, the total optical path length PL that is of the optical folding element 2 and that is suitable for the effective focal length EFL may be designed based on an expected field of view FOV of the optical lens 10. If PL/EFL is less than 0.5, the total optical path length PL of the optical folding element 2 is shorter than the effective focal length EFL, and a quantity of optical path parts that are in the optical lens 10 and in which a plurality of reflections do not occur increases. Consequently, an effect of folding an optical path by using the optical folding element 2 to reduce a module size is weakened. If PL/EFL is greater than 1.5, a ratio of the total optical path length PL of the optical folding element 2 to the effective focal length EFL becomes excessively large, and space required for arranging a lens used to ensure optical performance cannot be ensured. Consequently, expected optical performance cannot be obtained.

In some embodiments, the lens group 1 includes a first lens L1 closest to the object side, and a focal length F1 of the first lens L1 and the effective focal length EFL of the optical lens 10 may satisfy 0.2≤F1/EFL≤0.7. For example, a value of F1/EFL may be 0.24, 0.3, 0.4, 0.45, or 0.54. In some examples, the value of F1/EFL may satisfy: 0.25≤F1/EFL≤0.5.

In this embodiment, a ratio of the focal length F1 of the first lens L1 to the effective focal length EFL of the optical lens 10 is in a range from 0.2 to 0.7, so that a light focusing effect of the first lens L1 is appropriate for the optical lens 10, and a total optical path length of the lens group 1 and the total optical path length of the optical folding element 2 are both appropriate. This avoids an excessively large module size of the optical lens 10, and also enables the optical lens 10 to have better optical performance and better imaging quality.

In some embodiments, a reflective coating may be disposed on at least one reflective surface of the optical folding element 2, to improve a light reflection effect and improve light utilization.

In some embodiments, all lenses in the lens group 1 may be made of plastic materials or glass materials, or some lenses are made of plastic materials, and some lenses are made of glass materials.

In some embodiments, an object-side surface or an image-side surface of a lens in the lens group 1 may be a spherical surface or an aspherical surface.

In some embodiments, when object-side surfaces and/or image-side surfaces of some lenses in the lens group 1 are aspherical surfaces, the object-side surfaces and/or the image-side surfaces of the some lenses may be limited by using but not limited to the following aspherical surface formula:

$$z = \frac{cr^2}{1 + \sqrt{1 - (1 + k)c^2r^2}} + \sum_{i=2}^{N} \alpha_i r^{2i}$$

Herein, z is a relative distance between a point that is on the aspherical surface and whose distance from an optical axis O is r and a tangent plane at an intersection point on the optical axis O of the aspherical surface; r is a vertical distance between a point on an aspheric curve and the optical axis O; c is curvature; k is a conicity coefficient; and $\alpha_i$ is an $i^{th}$-order aspheric coefficient.

In the foregoing embodiment, an odd quantity of times of folding reflections of light may occur in the optical folding element 2, for example, five times in the embodiment shown in FIG. 6, or seven times, nine times, or the like in another embodiment. In this case, the emergent surface 22 and the incident surface 21 are located on a same side of the optical folding element 2. For example, the emergent surface 22 and the incident surface 21 are located on the top surface 24.

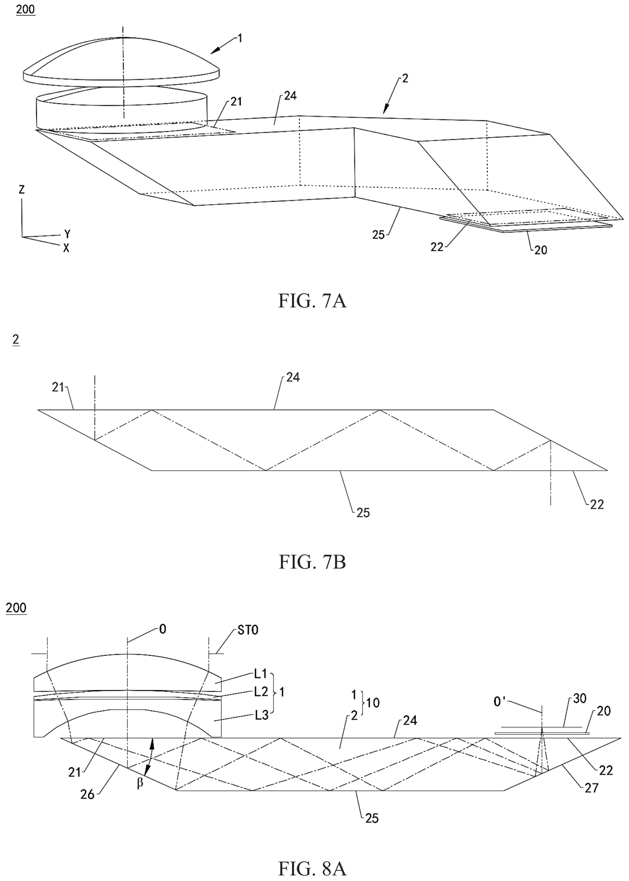

Refer to FIG. 7A and FIG. 7B. FIG. 7A is a diagram of a structure of a camera module 200 shown in FIG. 1 in some other embodiments. FIG. 7B is a diagram of an equivalent unfolded optical path of an optical folding element 2 of the camera module 200 shown in FIG. 7A. This embodiment may include most technical features of the foregoing embodiments. The following mainly describes differences between the two embodiments, and same parts of the two embodiments are not described again.

In some embodiments, an even number of times of folding reflections of light may occur in the optical folding element 2, for example, six times or eight times. In this case, the emergent surface 22 and the incident surface 21 of the optical folding element 2 are located on two opposite sides of the optical folding element 2. For example, the incident surface 21 is located on the top surface 24, and the emergent surface 22 is located on the bottom surface 25. In this way, the lens group 1 and the image sensor 20 are also located on two opposite sides of the optical folding element 2.

In the foregoing embodiment, the structure of the optical folding element 2 is bent once, and in the top view of the optical folding element 2, the optical path is deflected once. In some other embodiments of this application, the structure of the optical folding element 2 may be bent for more than two times, and in the top view of the optical folding element 2, the optical path may be deflected for more than two times. For example, the optical folding element 2 may be approximately of a U-shaped strip structure. In some other embodiments, the optical folding element 2 may be a prism, or may be another type of mechanical part. This is not strictly limited in this embodiment of this application.

Refer to FIG. 3 again. In some embodiments, in a focusing process of the camera module 200, the lens group 1, at least one lens in the lens group 1, or the image sensor 20 may move in a direction parallel to the optical axis O of the lens group 1. In this embodiment, the camera module 200 may implement automatic focusing through movement of the lens group 1, the lens in the lens group 1, or the image sensor 20, to obtain better imaging quality and photographing experience.

In an image stabilization process of the camera module 200, the lens group 1, the at least one lens in the lens group 1, or the image sensor 20 moves in a plane perpendicular to the optical axis O of the lens group 1. In this embodiment, the camera module 200 may implement optical image stabilization through movement of the lens group 1, the lens in the lens group 1, or the image sensor 20, to obtain better imaging quality and photographing experience.

For example, the lens group 1 and the image sensor 20 are located on a same side of the optical folding element 2, and a direction in which light is emitted into the image sensor 20 is parallel to the optical axis O of the lens group 1. In some other embodiments, a direction in which light is emitted into the image sensor 20 is not parallel to the optical axis O of the lens group 1. This is not strictly limited in this embodiment of this application.

With reference to the accompanying drawings, data, and simulation results, the following presents specific solutions of the camera module 200 and the optical lens 10 shown in FIG. 3 in some possible embodiments. To clearly show an optical path of a central field of view, the optical folding element 2 in FIG. 8A, FIG. 9A, and FIG. 10A below is shown by using an equivalent unfolded structure, to present an equivalent unfolded optical path.

First embodiment

Refer to FIG. 3, FIG. 4, and FIG. 8A. FIG. 8A is a diagram of an equivalent unfolded optical path of the camera module 200 shown in FIG. 3 in a first embodiment.

In this embodiment of this application, the camera module 200 may include an optical lens 10, an image sensor 20, and a light filter 30. After being refracted by the optical lens 10, light reflected by a photographed object passes through the light filter 30, and is emitted into the image sensor 20 for imaging.

For example, the optical lens 10 includes a lens group 1 and an optical folding element 2, and the optical folding element 2 is located on an image side of the lens group 1.

The lens group 1 has an optical axis O, and a height direction Z of the optical lens 10 is parallel to the optical axis O of the lens group 1. The lens group 1 includes a first lens L1, a second lens L2, and a third lens L3 that are arranged from an object side to the image side. The first lens L1 has a positive focal power, the second lens L2 has a positive focal power, and the third lens L3 has a negative focal power.

The optical folding element 2 includes a first part 2a, a second part 2b, and a third part 2c that are sequentially connected from the object side to the image side. The light emitted into the optical folding element 2 is emitted outside after sequentially passing through the first part 2a, the second part 2b, and the third part 2c. The first part 2a may extend in a first direction, and the third part 2c may extend in a second direction. A plane in which the first direction and the second direction are located is perpendicular to the optical axis O of the lens group 1, and the second direction intersects with the first direction. The plane in which the first direction and the second direction are located is perpendicular to the optical axis O of the lens group 1, specifically, perpendicular to the height direction Z of the optical lens 10. The optical folding element 2 is approximately arranged in a plane (namely, a plane XY) perpendicular to the height direction Z of the optical lens 10. The optical folding element 2 may be a prism.

The optical folding element 2 may include a top surface 24 and a bottom surface 25 that are disposed in parallel, and an arrangement direction of the top surface 24 and the bottom surface 25 is parallel to the optical axis O of the lens group 1. The optical folding element 2 includes an incident surface 21, an emergent surface 22, and a deflection reflection surface 23 (not shown in FIG. 8A). The incident surface 21 is located in the first part 2a and located on the top surface 24. The emergent surface 22 is located in the third part 2c and located on the top surface 24. The deflection reflection surface 23 is located in the second part 2b, and connects the top surface 24 to the bottom surface 25. The deflection reflection surface 23 is parallel to the optical axis O of the lens group 1, and is perpendicular to the top surface 24.

The optical folding element 2 further includes a first reflective surface 26 and a second reflective surface 27, where the first reflective surface 26 is located in the first part 2a and connects the top surface 24 to the bottom surface 25, and the second reflective surface 27 is located in the third part 2c and connects the top surface 24 to the bottom surface 25. After light is emitted into the optical folding element 2, a first reflection occurs on the first reflective surface 26, three reflections occur on the top surface 24 and the bottom surface 25, a reflection occurs on the deflection reflection surface 23 (not shown in FIG. 8A), and a last reflection occurs on the second reflective surface 27. In this case, six reflections of the light occur in the optical folding element 2, including one deflection reflection and five folding reflections.

In this embodiment of this application, after being converged by the lens group 1, the light is emitted into the optical folding element 2 through the incident surface 21 of the optical folding element 2. After being subject to six reflections in the optical folding element 2, the light is emitted out of the optical folding element 2 through the emergent surface 22, and then is imaged on the image sensor 20. The optical lens 10 reflects the converged light of the lens group 1 a plurality of times through the optical folding element 2, to perform optical path folding, so that physical space between the lens group 1 and the image sensor 20 can be shortened, a module size of the optical lens 10 is reduced, and miniaturization is implemented.

The optical folding element 2 is approximately arranged in the plane (namely, a plane XY) perpendicular to the height direction Z of the optical lens 10, and a height of the optical folding element 2 is far less than a back focal length of the optical lens 10, so that heights of the optical lens 10 and the camera module 200 can be reduced, and miniaturization is facilitated.

In addition, because an extension direction of the optical folding element 2 deflects in the second part 2b, an extension direction (the first direction) of the first part 2a of the optical folding element 2 intersects with an extension direction (the second direction) of the third part 2c, and the optical folding element 2 is structurally bent. As a result, a size of the optical folding element 2 in the first direction is reduced, and a length size of the optical folding element 2 in the length direction Y of the optical lens 10 is reduced, so that module lengths of the optical lens 10 and the camera module 200 can be effectively reduced, and a miniaturization design is facilitated.

In an embodiment of this application, a shape of the optical folding element 2 is designed for the optical lens 10, and six reflections of the light occur in the optical folding element 2, so that the optical folding element 2 can have a long optical path in a case of a small volume, and a long-focus design of the optical lens 10 is facilitated.

Refer to Table 1a. Table 1a shows a curvature radius, a thickness, a refractive index (Nd), an Abbe number (Vd), and an effective radius of each lens, the optical folding element 2, and the light filter 30 of the camera module 200 shown in FIG. 3 and FIG. 8A in a possible embodiment. The thickness includes a thickness of a structure and a spacing between structures, and INF is infinite. STO is a stop.

Table 1a

| No. | Descriptions | Surface type | Curvature radius | Thickness | Thickness (macro) | Refractive index | Abbe number | Effective radius |
|---|---|---|---|---|---|---|---|---|
| 1 | STO | | INF | 0 | | | | 5.7 |
| 2 | L1 | Aspherical | 8.1664 | 2.5156 | | 1.8513 | 40.0878 | 5.6994 |
| 3 | | Aspherical | 79.2591 | 0.04 | | | | 5.5395 |
| 4 | L2 | Aspherical | 56.6966 | 0.4249 | | 1.6613 | 20.3376 | 5.2737 |
| 5 | | Aspherical | 670.4509 | 0.1822 | | | | 5.1640 |
| 6 | L3 | Aspherical | -68.1072 | 0.6789 | | 1.6393 | 23.2370 | 5.1340 |
| 7 | | Aspherical | 7.8393 | 2.0235 | 3.1495 | | | 4.1174 |
| 8 | Optical folding element | | INF | 2.1376 | | 1.4875 | 70.4055 | 4.0294 |
| 9 | Optical folding element | | INF | -4.4528 | | 1.4875 | 70.4055 | 4.7253 |
| 10 | Optical folding element | | INF | 7.7172 | | 1.4875 | 70.4055 | 8.6706 |
| 11 | Optical folding element | | INF | -7.7172 | | 1.4875 | 70.4055 | 8.2126 |
| 12 | Optical folding element | | INF | 5.1390 | | 1.4875 | 70.4055 | 8.0126 |
| 13 | Optical folding element | | INF | -2.4671 | | 1.4875 | 70.4055 | 4.3307 |
| 14 | | | INF | -0.25 | | | | 3.6686 |
| 15 | Light filter | | | -0.11 | | 1.5125 | 55.6821 | 3.6641 |

(continued)

| No. | Descriptions | Surface type | Curvature radius | Thickness | Thickness (macro) | Refractive index | Abbe number | Effective radius |
|-----|--------------|--------------|------------------|-----------|-------------------|------------------|-------------|------------------|
| 16 |  |  |  | -0.41 |  |  |  | 3.6628 |
| 17 | Image plane |  |  |  |  |  |  | 3.6563 |

Refer to Table 1b. Table 1b shows aspheric coefficients of lenses of the camera module 200 shown in FIG. 3 and FIG. 8A in a possible embodiment.

Table 1b

| No. | K | A4 | A6 | A8 | A10 | A12 |
|-----|---|-----|-----|-----|------|------|
| 2 | 0.00E+00 | -4.11E-05 | -1.22E-06 | 7.58E-08 | -3.76E-09 | 3.58E-11 |
| 3 | 0.00E+00 | -4.79E-05 | 2.42E-06 | -3.67E-07 | 1.34E-08 | -1.41E-10 |
| 4 | 0.00E+00 | 7.90E-04 | -3.37E-05 | 1.28E-06 | -5.86E-08 | 1.16E-09 |
| 5 | 0.00E+00 | 5.41E-04 | 2.21E-05 | -2.62E-06 | 5.73E-08 | -7.63E-11 |
| 6 | 0.00E+00 | 1.21E-03 | -4.15E-05 | -4.03E-07 | 5.41E-08 | -8.48E-10 |
| 7 | 0.00E+00 | 2.12E-03 | -9.23E-05 | 3.51E-06 | -1.04E-08 | -1.09E-09 |

Herein, K is a quadratic surface constant, and symbols such as A4, A6, A8, A10, and A12 represent aspheric coefficients.

In this embodiment, the aspheric surface of the optical lens 10 in Table 1a may be limited by using, but not limited to, the following aspheric surface formula:

$$z = \frac{cr^2}{1 + \sqrt{1 - (1+k)c^2r^2}} + \sum_{i=2}^{N} \alpha_i r^{2i}$$

Herein, z is a relative distance between a point that is on the aspherical surface and whose distance from an optical axis O is r and a tangent plane at an intersection point on the optical axis O of the aspherical surface; r is a vertical distance between a point on an aspheric curve and the optical axis O; c is curvature; k is a conicity coefficient; and $\alpha_i$ is an $i^{th}$-order aspheric coefficient.

Refer to Table 1c. Table 1c shows parameters of the camera module 200 shown in FIG. 3 and FIG. 8A in a possible embodiment. In Table 1c, Y is a semi-sensor diagonal (namely, an image height), EFL is an effective focal length of the optical lens 10, TTL is a total track length of the optical lens 10, PL is a total optical path length of the optical folding element 2, F1 is a focal length of the first lens L1, F2 is a focal length of the second lens L2, F3 is a focal length of the third lens L3, $\alpha$ is a first included angle between the first direction and the second direction, $\beta$ is a second included angle between the incident surface 21 and the first reflective surface 26, FOV is a field of view of the optical lens 10, Fno is an f-number of the optical lens 10, and S is a spacing between the optical axis O of the lens group 1 and the emergent optical axis O' in the equivalent optical path.

Table 1c

| Parameter | Y (mm) | EFL (mm) | TTL (mm) | PL (mm) | F1 (mm) | F2 (mm) | F3 (mm) | S (mm) |
|-----------|--------|----------|----------|---------|---------|---------|---------|--------|
| Value | 3.584 | 33 | 36.266 | 29.63 | 10.48 | 93.11 | -10.88 | 22 |
| Parameter | $\alpha$ | $\beta$ | FOV | Fno | PL/EFL | TTL/EFL | F1/EFL | |
| Value | 30° to 150° | 31.967° | 12.4° | 2.89 | 0.8979 | 1.099 | 0.317 | |

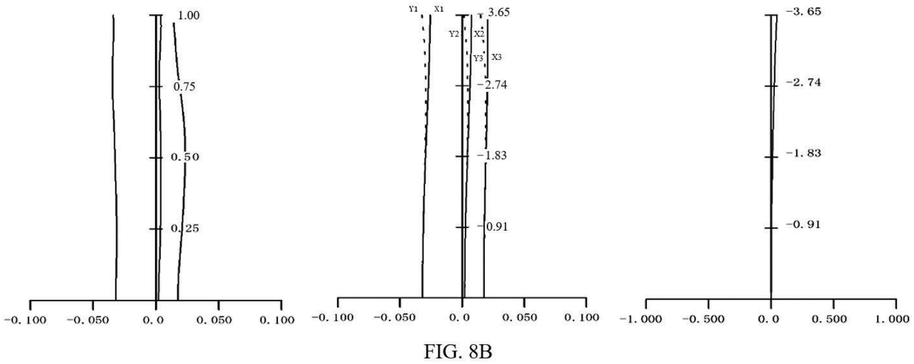

Refer to FIG. 8B. FIG. 8B is a diagram of a simulation effect of the camera module 200 shown in FIG. 8A in a possible embodiment.

FIG. 8B includes an axial chromatic aberration curve, an astigmatism and field curvature curve, and a distortion curve. The axial chromatic aberration curve indicates a deviation of a convergence point after light of different wavelengths passes through lenses of an optical system. A reference wavelength of the axial chromatic aberration curve is 486.1 nm, 587.6 nm, or 656.3 nm. A physical meaning of the axial chromatic aberration curve is a deviation relative to an ideal image point after light of a corresponding wavelength emitted from a 0-degree field of view passes through the optical lens 10. A horizontal coordinate of the axial chromatic aberration curve is a deviation value in a direction of the optical axis O, and a vertical coordinate of the axial chromatic aberration curve is a normalized coordinate at a pupil. Values in FIG. 8B are all small, and axial aberrations (a spherical aberration, a chromatic aberration, and the like) of the optical lens 10 is well corrected. The astigmatism and field curvature curve indicates meridional image plane bending and sagittal image plane bending, and indicates a deviation between a convergence point of fine light beams in different fields of view and an ideal imaging plane, where a solid line is a light beam in a meridional direction, and a dashed line is a light beam in a sagittal direction. A horizontal coordinate of the astigmatism and field curvature curve is a deviation value in a direction of the optical axis O, and a vertical coordinate of the astigmatism and field curvature curve is a corresponding field of view. A reference wavelength of the astigmatism and field curvature curve may be 486.1 nm, 587.6 nm, or 656.3 nm. When a value of a field of view is excessively large, image quality of the field of view is poor or a high-order aberration exists. As shown in FIG. 8B, field curvatures in the two directions are small, and the system has a good depth of focus. The distortion curve represents a relative deviation between a convergence point (an actual image height) of light beams in different fields of view and an ideal image height. A reference wavelength of the distortion curve may be 486.1 nm, 587.6 nm, or 656.3 nm, and is within 1% shown in FIG. 8B, so that it can be ensured that there is no obvious distortion in a picture. It can be learned from FIG. 8B that the camera module 200 provided in this embodiment can implement good imaging quality. In FIG. 8B, because the distortion curve is very close to the vertical coordinate, the distortion curve partially coincides with the vertical coordinate in the figure.

In the camera module 200 provided in this embodiment, when an object distance is infinite, a field of view FOV of the optical lens 10 of the camera module 200 is 12.4°, an effective focal length EFL is 33 mm, a total track length TTL of the optical lens 10 is 36.266 mm, and a total optical path length PL of the optical folding element 2 is 29.63 mm. One deflection reflection and five folding reflections of light occur in the optical folding element 2, so that the optical lens 10 has features of a long focal length and miniaturization, and the camera module 200 can have good imaging quality.

Second embodiment

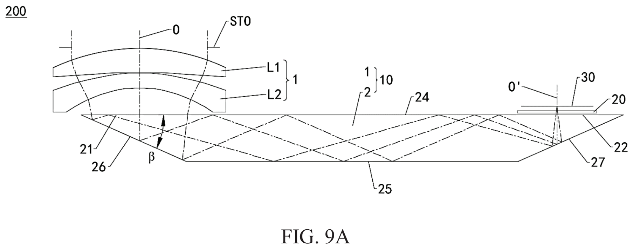

Refer to FIG. 3, FIG. 4, and FIG. 9A. FIG. 9A is a diagram of an equivalent unfolded optical path of the camera module 200 shown in FIG. 3 in a second embodiment.

In this embodiment of this application, the camera module 200 may include an optical lens 10, an image sensor 20, and a light filter 30. After being refracted by the optical lens 10, light reflected by a photographed object passes through the light filter 30, and is emitted into the image sensor 20 for imaging.

For example, the optical lens 10 includes a lens group 1 and an optical folding element 2, and the optical folding element 2 is located on an image side of the lens group 1.

The lens group 1 has an optical axis O, and a height direction Z of the optical lens 10 is parallel to the optical axis O of the lens group 1. The lens group 1 includes a first lens L1 and a second lens L2 that are arranged from an object side to the image side. The first lens L1 has a positive focal power, and the second lens L2 has a negative focal power.

The optical folding element 2 includes a first part 2a, a second part 2b, and a third part 2c that are sequentially connected from the object side to the image side. The light emitted into the optical folding element 2 is emitted outside after sequentially passing through the first part 2a, the second part 2b, and the third part 2c. The first part 2a may extend in a first direction, and the third part 2c may extend in a second direction. A plane in which the first direction and the second direction are located is perpendicular to the optical axis O of the lens group 1, and the second direction intersects with the first direction. The plane in which the first direction and the second direction are located is perpendicular to the optical axis O of the lens group 1, specifically, perpendicular to the height direction Z of the optical lens 10. The optical folding element 2 is approximately arranged in a plane (namely, a plane XY) perpendicular to the height direction Z of the optical lens 10. The optical folding element 2 may be a prism.

The optical folding element 2 may include a top surface 24 and a bottom surface 25 that are disposed in parallel, and an arrangement direction of the top surface 24 and the bottom surface 25 is parallel to the optical axis O of the lens group 1. The optical folding element 2 includes an incident surface 21, an emergent surface 22, and a deflection reflection surface 23 (not shown in FIG. 9A). The incident surface 21 is located in the first part 2a and located on the top surface 24. The emergent surface 22 is located in the third part 2c and located on the top surface 24. The deflection reflection surface 23 is located in the second part 2b, and connects the top surface 24 to the bottom surface 25. The deflection reflection surface 23 is parallel to the optical axis O of the lens group 1, and is perpendicular to the top surface 24.

The optical folding element 2 further includes a first reflective surface 26 and a second reflective surface 27, where the first reflective surface 26 is located in the first part 2a and connects the top surface 24 to the bottom surface 25, and the second reflective surface 27 is located in the third part 2c and connects the top surface 24 to the bottom surface 25. After light is emitted into the optical folding element 2, a first reflection occurs on the first reflective surface 26, three reflections occur on the top surface 24 and the bottom surface 25, a reflection occurs on the deflection reflection surface 23 (not shown in FIG. 9A), and a last reflection occurs on the second reflective surface 27. In this case, six reflections of the light occur in the optical folding element 2, including one deflection reflection and five folding reflections.

In this embodiment of this application, after being converged by the lens group 1, the light is emitted into the optical folding element 2 through the incident surface 21 of the optical folding element 2. After being subject to six reflections in the optical folding element 2, the light is emitted out of the optical folding element 2 through the emergent surface 22, and then is imaged on the image sensor 20. The optical lens 10 reflects the converged light of the lens group 1 a plurality of times through the optical folding element 2, to perform optical path folding, so that physical space between the lens group 1 and the image sensor 20 can be shortened, a module size of the optical lens 10 is reduced, and miniaturization is implemented.

The optical folding element 2 is approximately arranged in the plane (namely, a plane XY) perpendicular to the height direction Z of the optical lens 10, and a height of the optical folding element 2 is far less than a back focal length of the optical lens 10, so that heights of the optical lens 10 and the camera module 200 can be reduced, and miniaturization is facilitated.

In addition, because an extension direction of the optical folding element 2 deflects in the second part 2b, an extension direction (the first direction) of the first part 2a of the optical folding element 2 intersects with an extension direction (the second direction) of the third part 2c, and the optical folding element 2 is structurally bent. As a result, a size of the optical folding element 2 in the first direction is reduced, and a length size of the optical folding element 2 in the length direction Y of the optical lens 10 is reduced, so that module lengths of the optical lens 10 and the camera module 200 can be effectively reduced, and a miniaturization design is facilitated.

In an embodiment of this application, a shape of the optical folding element 2 is designed for the optical lens 10, and six reflections of the light occur in the optical folding element 2, so that the optical folding element 2 can have a long optical path in a case of a small volume, and a long-focus design of the optical lens 10 is facilitated.

Refer to Table 2a. Table 2a shows a curvature radius, a thickness, a refractive index (Nd), an Abbe number (Vd), and an effective radius of each lens, the optical folding element 2, and the light filter 30 of the camera module 200 shown in FIG. 3 and FIG. 9A in a possible embodiment. The thickness includes a thickness of a structure and a spacing between structures, and INF is infinite. STO is a stop.

Table 2a

| No. | Descriptions | Surface type | Curvature radius | Thickness | Thickness (macro) | Refractive index | Abbe number | Effective radius |
|---|---|---|---|---|---|---|---|---|
| 1 | STO | | INF | 0 | | | | 5.6 |
| 2 | L1 | Aspherical | 8.9204 | 2.1300 | | 1.8513 | 40.0878 | 5.6536 |
| 3 | | Aspherical | 37.3485 | 0.04 | | | | 5.4826 |
| 4 | L2 | Aspherical | 8.6758 | 1.2863 | | 2.0018 | 19.3165 | 4.9934 |
| 5 | | Aspherical | 5.2579 | 2.393 | 3.326 | | | 4.1595 |
| 6 | Optical folding element | | INF | 2.2120 | | 1.4875 | 70.4055 | 4.0773 |
| 7 | Optical folding element | | INF | -5.0134 | | 1.4875 | 70.4055 | 4.8386 |
| 8 | Optical folding element | | INF | 8.9410 | | 1.4875 | 70.4055 | 9.4976 |
| 9 | Optical folding element | | INF | -8.9410 | | 1.4875 | 70.4055 | 9.0624 |
| 10 | Optical folding element | | INF | 5.6897 | | 1.4875 | 70.4055 | 8.8606 |
| 11 | Optical folding element | | INF | -2.5104 | | 1.4875 | 70.4055 | 4.4757 |
| 12 | | | INF | -0.25 | | | | 3.7518 |
| 13 | Light filter | | INF | -0.11 | | 1.5125 | 55.6821 | 3.7482 |
| 14 | | | INF | -0.41 | | | | 3.7471 |

(continued)

| No. | Descriptions | Surface type | Curvature radius | Thickness | Thickness (macro) | Refractive index | Abbe number | Effective radius |
|---|---|---|---|---|---|---|---|---|
| 15 | Image plane | | INF | 0 | | | | 3.7412 |

Refer to Table 2b. Table 2b shows aspheric coefficients of lenses of the camera module 200 shown in FIG. 3 and FIG. 9A in a possible embodiment.

Table 2b

| No. | K | A4 | A6 | A8 | A10 | A12 |
|---|---|---|---|---|---|---|
| 2 | 0.00E+00 | -8.19E-05 | 1.28E-06 | -5.40E-08 | 1.35E-09 | -2.74E-11 |
| 3 | 0.00E+00 | -7.65E-05 | 4.98E-06 | -2.15E-07 | 3.75E-09 | -2.54E-11 |
| 4 | 0.00E+00 | -2.91E-04 | -6.27E-06 | 2.85E-07 | -1.49E-08 | 2.67E-10 |
| 5 | 0.00E+00 | -4.88E-04 | -2.15E-05 | 2.59E-07 | -1.87E-08 | -5.82E-10 |

Herein, K is a quadratic surface constant, and symbols such as A4, A6, A8, A10, and A12 represent aspheric coefficients.

In this embodiment, the aspheric surface of the optical lens 10 in Table 2a may be limited by using, but not limited to, the following aspheric surface formula:

$$z = \frac{cr^2}{1 + \sqrt{1 - (1+k)c^2 r^2}} + \sum_{i=2}^{N} \alpha_i r^{2i}$$

Herein, z is a relative distance between a point that is on the aspherical surface and whose distance from an optical axis O is r and a tangent plane at an intersection point on the optical axis O of the aspherical surface; r is a vertical distance between a point on an aspheric curve and the optical axis O; c is curvature; k is a conicity coefficient; and $\alpha_i$ is an $i^{th}$-order aspheric coefficient.

Refer to Table 2c. Table 2c shows parameters of the camera module 200 shown in FIG. 3 and FIG. 9A in a possible embodiment. In Table 2c, Y is a semi-sensor diagonal (namely, an image height), EFL is an effective focal length of the optical lens 10, TTL is a total track length of the optical lens 10, PL is a total optical path length of the optical folding element 2, F1 is a focal length of the first lens L1, F2 is a focal length of the second lens L2, $\alpha$ is a first included angle between the first direction and the second direction, $\beta$ is a second included angle between the incident surface 21 and the first reflective surface 26, FOV is a field of view of the optical lens 10, Fno is an f-number of the optical lens 10, and S is a spacing between the optical axis O of the lens group 1 and the emergent optical axis O' in the equivalent optical path.

Table 2c

| Parameter | Y (mm) | EFL (mm) | TTL (mm) | PL (mm) | F1 (mm) | F2 (mm) | F1/EFL |
|---|---|---|---|---|---|---|---|
| Value | 3.584 | 33 | 39.92 | 33.3 | 13.25 | -16.28 | 0.401 |
| Parameter | $\alpha$ | $\beta$ | FOV | Fno | PL/EFL | TTL/EFL | S (mm) |
| Value | 30° to 150° | 31.909° | 12.4° | 2.95 | 1.0091 | 1.210 | 25.7 |

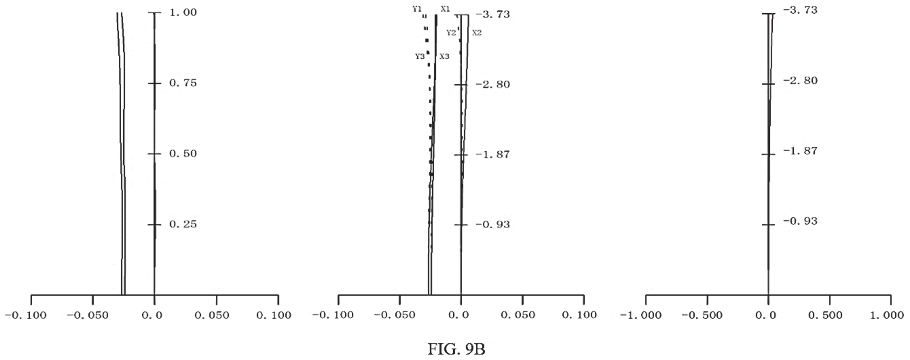

Refer to FIG. 9B. FIG. 9B is a diagram of a simulation effect of the camera module 200 shown in FIG. 9A in a possible embodiment.

FIG. 9B includes an axial chromatic aberration curve, an astigmatism and field curvature curve, and a distortion curve. The axial chromatic aberration curve indicates a deviation of a convergence point after light of different wavelengths passes through lenses of an optical system. A reference wavelength of the axial chromatic aberration curve is 486.1 nm, 587.6 nm, or 656.3 nm. A physical meaning of the axial chromatic aberration curve is a deviation relative to an ideal image point after light of a corresponding wavelength emitted from a 0-degree field of view passes through the optical lens 10. A horizontal coordinate of the axial chromatic aberration curve is a deviation value in a direction of the optical axis O, and a vertical coordinate of the axial chromatic aberration curve is a normalized coordinate at a pupil. Values in FIG. 9B are all small, and axial aberrations (a spherical aberration, a chromatic aberration, and the like) of the optical lens 10 is well corrected. The astigmatism and field curvature curve indicates meridional image plane bending and sagittal image plane bending, and indicates a deviation between a convergence point of fine light beams in different fields of view and an ideal imaging plane, where a solid line is a light beam in a meridional direction, and a dashed line is a light beam in a sagittal direction. A horizontal coordinate of the astigmatism and field curvature curve is a deviation value in a direction of the optical axis O, and a vertical coordinate of the astigmatism and field curvature curve is a corresponding field of view. A reference wavelength of the astigmatism and field curvature curve may be 486.1 nm, 587.6 nm, or 656.3 nm. When a value of a field of view is excessively large, image quality of the field of view is poor or a high-order aberration exists. As shown in FIG. 9B, field curvatures in the two directions are small, and the system has a good depth of focus. The distortion curve represents a relative deviation between a convergence point (an actual image height) of light beams in different fields of view and an ideal image height. A reference wavelength of the distortion curve may be 486.1 nm, 587.6 nm, or 656.3 nm, and is within 1% shown in FIG. 9B, so that it can be ensured that there is no obvious distortion in a picture. It can be learned from FIG. 9B that the camera module 200 provided in this embodiment can implement good imaging quality. In FIG. 9B, because the distortion curve is very close to the vertical coordinate, the distortion curve partially coincides with the vertical coordinate in the figure.

In the camera module 200 provided in this embodiment, when an object distance is infinite, a field of view FOV of the optical lens 10 of the camera module 200 is 12.4°, an effective focal length EFL is 33 mm, a total track length TTL of the optical lens 10 is 39.92 mm, and a total optical path length PL of the optical folding element 2 is 33.3 mm. One deflection reflection and five folding reflections of light occur in the optical folding element 2, so that the optical lens 10 has features of a long focal length and miniaturization, and the camera module 200 can have good imaging quality.


Third embodiment


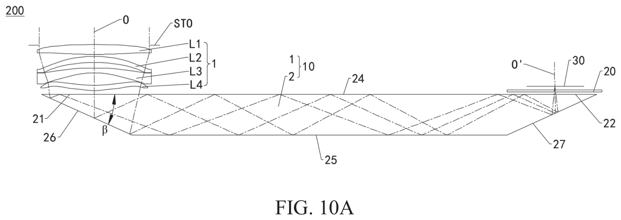

Refer to FIG. 3, FIG. 4, and FIG. 10A. FIG. 10A is a diagram of an equivalent unfolded optical path of the camera module 200 shown in FIG. 3 in a third embodiment.

In this embodiment of this application, the camera module 200 may include an optical lens 10, an image sensor 20, and a light filter 30. After being refracted by the optical lens 10, light reflected by a photographed object passes through the light filter 30, and is emitted into the image sensor 20 for imaging.

For example, the optical lens 10 includes a lens group 1 and an optical folding element 2, and the optical folding element 2 is located on an image side of the lens group 1.

The lens group 1 has an optical axis O, and a height direction Z of the optical lens 10 is parallel to the optical axis O of the lens group 1. The lens group 1 includes a first lens L1, a second lens L2, a third lens L3, and a fourth lens L4 that are arranged from an object side to the image side. The first lens L1 has a positive focal power, the second lens L2 has a positive focal power, the third lens L3 has a negative focal power, and the fourth lens L4 has a positive focal power.

The optical folding element 2 includes a first part 2a, a second part 2b, and a third part 2c that are sequentially connected from the object side to the image side. The light emitted into the optical folding element 2 is emitted outside after sequentially passing through the first part 2a, the second part 2b, and the third part 2c. The first part 2a may extend in a first direction, and the third part 2c may extend in a second direction. A plane in which the first direction and the second direction are located is perpendicular to the optical axis O of the lens group 1, and the second direction intersects with the first direction. The plane in which the first direction and the second direction are located is perpendicular to the optical axis O of the lens group 1, specifically, perpendicular to the height direction Z of the optical lens 10. The optical folding element 2 is approximately arranged in a plane (namely, a plane XY) perpendicular to the height direction Z of the optical lens 10. The optical folding element 2 may be a prism.

The optical folding element 2 may include a top surface 24 and a bottom surface 25 that are disposed in parallel, and an arrangement direction of the top surface 24 and the bottom surface 25 is parallel to the optical axis O of the lens group 1. The optical folding element 2 includes an incident surface 21, an emergent surface 22, and a deflection reflection surface 23 (not shown in FIG. 10A). The incident surface 21 is located in the first part 2a and located on the top surface 24. The emergent surface 22 is located in the third part 2c and located on the top surface 24. The deflection reflection surface 23 is located in the second part 2b, and connects the top surface 24 to the bottom surface 25. The deflection reflection surface 23 is parallel to the optical axis O of the lens group 1, and is perpendicular to the top surface 24.

The optical folding element 2 further includes a first reflective surface 26 and a second reflective surface 27, where the first reflective surface 26 is located in the first part 2a and connects the top surface 24 to the bottom surface 25, and the second reflective surface 27 is located in the third part 2c and connects the top surface 24 to the bottom surface 25. After light is emitted into the optical folding element 2, a first reflection occurs on the first reflective surface 26, five reflections occur on the top surface 24 and the bottom surface 25, a reflection occurs on the deflection reflection surface 23 (not shown in FIG. 10A), and a last reflection occurs on the second reflective surface 27. In this case, eight reflections of the light occur in the optical folding element 2, including one deflection reflection and seven folding reflections.

In this embodiment of this application, after being converged by the lens group 1, the light is emitted into the optical folding element 2 through the incident surface 21 of the optical folding element 2. After being subject to eight reflections in the optical folding element 2, the light is emitted out of the optical folding element 2 through the emergent surface 22, and then is imaged on the image sensor 20. The optical lens 10 reflects the converged light of the lens group 1 a plurality of times through the optical folding element 2, to perform optical path folding, so that physical space between the lens group 1 and the image sensor 20 can be shortened, a module size of the optical lens 10 is reduced, and miniaturization is implemented.

The optical folding element 2 is approximately arranged in the plane (namely, a plane XY) perpendicular to the height direction Z of the optical lens 10, and a height of the optical folding element 2 is far less than a back focal length of the optical lens 10, so that heights of the optical lens 10 and the camera module 200 can be reduced, and miniaturization is facilitated.

In addition, because an extension direction of the optical folding element 2 deflects in the second part 2b, an extension direction (the first direction) of the first part 2a of the optical folding element 2 intersects with an extension direction (the second direction) of the third part 2c, and the optical folding element 2 is structurally bent. As a result, a size of the optical folding element 2 in the first direction is reduced, and a length size of the optical folding element 2 in the length direction Y of the optical lens 10 is reduced, so that module lengths of the optical lens 10 and the camera module 200 can be effectively reduced, and a miniaturization design is facilitated.

In an embodiment of this application, a shape of the optical folding element 2 is designed for the optical lens 10, and eight reflections of the light occur in the optical folding element 2, so that the optical folding element 2 can have a long optical path in a case of a small volume, and a long-focus design of the optical lens 10 is facilitated.

Refer to Table 3a. Table 3a shows a curvature radius, a thickness, a refractive index (Nd), an Abbe number (Vd), and an effective radius of each lens, the optical folding element 2, and the light filter 30 of the camera module 200 shown in FIG. 3 and FIG. 10A in a possible embodiment. The thickness includes a thickness of a structure and a spacing between structures, and INF is infinite. STO is a stop.

Table 3a

| No. | Descriptions | Surface type | Curvature radius | Thickness | Thickness (macro) | Refractive index | Abbe number | Effective radius |
|---|---|---|---|---|---|---|---|---|
| 1 | STO | | INF | 0.0000 | | | | 4.6721 |
| 2 | L1 | Aspherical | 40.6942 | 1.0362 | | 1.8820 | 37.2065 | 4.6447 |
| 3 | | Aspherical | -24.1503 | 0.2119 | | | | 4.5522 |
| 4 | L2 | Aspherical | 6.5277 | 0.6330 | | 1.6713 | 19.2265 | 4.2090 |
| 5 | | Aspherical | 9.8928 | 0.6264 | | | | 4.0638 |
| 6 | L3 | Aspherical | 473.8015 | 0.4768 | | 1.6713 | 19.2265 | 4.0560 |
| 7 | | Aspherical | 6.8287 | 1.2721 | | | | 3.8520 |
| 8 | L4 | Aspherical | -14.6453 | 0.5137 | | 1.5350 | 55.6864 | 3.8494 |
| 9 | | Aspherical | -11.2716 | 0.4300 | 0.8400 | | | 3.7706 |
| 10 | Optical folding element | | INF | 2.5000 | | 1.5168 | 64.1745 | 3.7197 |
| 11 | Optical folding element | | INF | -5.0000 | | 1.5168 | 64.1745 | 4.2706 |
| 12 | Optical folding element | | INF | 8.6000 | | 1.5168 | 64.1745 | 7.3466 |
| 13 | Optical folding element | | INF | -8.6000 | | 1.5168 | 64.1745 | 6.8033 |
| 14 | Optical folding element | | INF | 8.6000 | | 1.5168 | 64.1745 | 6.3148 |
| 15 | Optical folding element | | INF | -8.6000 | | 1.5168 | 64.1745 | 5.8807 |
| 16 | Optical folding element | | INF | 4.0000 | | 1.5168 | 64.1745 | 5.5140 |

(continued)

| No. | Descriptions | Surface type | Curvature radius | Thickness | Thickness (macro) | Refractive index | Abbe number | Effective radius |
|---|---|---|---|---|---|---|---|---|
| 17 | Optical folding element | | INF | -2.0000 | | 1.5168 | 64.1745 | 3.7664 |
| 18 | | | INF | -0.2500 | | | | 3.5737 |
| 19 | Light filter | | INF | -0.1100 | | 1.5125 | 55.6821 | 3.5773 |
| 20 | | | INF | -0.4100 | | | | 3.5783 |
| 21 | Image plane | | INF | 0.0000 | | | | 3.5847 |

Refer to Table 3b. Table 3b shows aspheric coefficients of lenses of the camera module 200 shown in FIG. 3 and FIG. 10A in a possible embodiment.

Table 3b

| No. | K | A4 | A6 | A8 | A10 | A12 |
|---|---|---|---|---|---|---|
| 2 | 0.00E+00 | 8.45E-04 | -2.39E-05 | -1.50E-06 | 1.02E-07 | -7.52E-10 |
| 3 | 0.00E+00 | 1.50E-03 | -1.00E-04 | 3.45E-06 | -3.93E-08 | 9.52E-10 |
| 4 | -7.19E+00 | 2.29E-03 | -2.56E-04 | 1.30E-05 | -4.40E-08 | -6.67E-09 |
| 5 | -8.99E-01 | -6.19E-05 | 1.17E-04 | -1.29E-05 | 8.31E-07 | -2.02E-08 |
| 6 | 5.00E+01 | 4.65E-03 | -2.70E-04 | 4.79E-06 | -5.26E-08 | 2.25E-09 |
| 7 | 1.20E+00 | 8.26E-04 | -1.90E-04 | -8.77E-06 | 9.99E-07 | -2.54E-08 |
| 8 | -5.00E+01 | -4.72E-03 | 4.37E-04 | -7.29E-06 | 3.50E-08 | 2.28E-09 |
| 9 | -9.10E+00 | -2.35E-03 | 1.79E-04 | 9.40E-06 | -5.65E-07 | 1.17E-08 |

Herein, K is a quadratic surface constant, and symbols such as A4, A6, A8, A10, and A12 represent aspheric coefficients.

In this embodiment, the aspheric surface of the optical lens 10 in Table 3a may be limited by using, but not limited to, the following aspheric surface formula:

$$z = \frac{cr^2}{1 + \sqrt{1 - (1+k)c^2r^2}} + \sum_{i=2}^{N} \alpha_i r^{2i}$$

Herein, z is a relative distance between a point that is on the aspherical surface and whose distance from an optical axis O is r and a tangent plane at an intersection point on the optical axis O of the aspherical surface; r is a vertical distance between a point on an aspheric curve and the optical axis O; c is curvature; k is a conicity coefficient; and $\alpha_i$ is an $i^{th}$-order aspheric coefficient.

Refer to Table 3c. Table 3c shows parameters of the camera module 200 shown in FIG. 3 and FIG. 10A in a possible embodiment. In Table 3c, Y is a semi-sensor diagonal (namely, an image height), EFL is an effective focal length of the optical lens 10, TTL is a total track length of the optical lens 10, PL is a total optical path length of the optical folding element 2, F1 is a focal length of the first lens L1, F2 is a focal length of the second lens L2, F3 is a focal length of the third lens L3, F4 is a focal length of the fourth lens L4, $\alpha$ is a first included angle between the first direction and the second direction, $\beta$ is a second included angle between the incident surface 21 and the first reflective surface 26, FOV is a field of view of the optical lens 10, Fno is an f-number of the optical lens 10, and S is a spacing between the optical axis O of the lens group 3 and the emergent optical axis O' in the equivalent optical path.

Table 3c

| Parameter | Y (mm) | EFL (mm) | TTL (mm) | PL (mm) | F1 (mm) | F2 (mm) | F3 (mm) | F4 (mm) |
|---|---|---|---|---|---|---|---|---|
| Value | 3.584 | 40.28 | 53.87 | 47.9 | 17.23 | 26.32 | -10.23 | 86.55 |

(continued)

| Parameter | α | β | FOV | Fno | PL/EFL | TTL/EFL | F1/EFL | S (mm) |
|---|---|---|---|---|---|---|---|---|
| Value | 30° to 150° | 30° | 10.17° | 4.35 | 1.1892 | 1.337 | 0.428 | 37.6 |

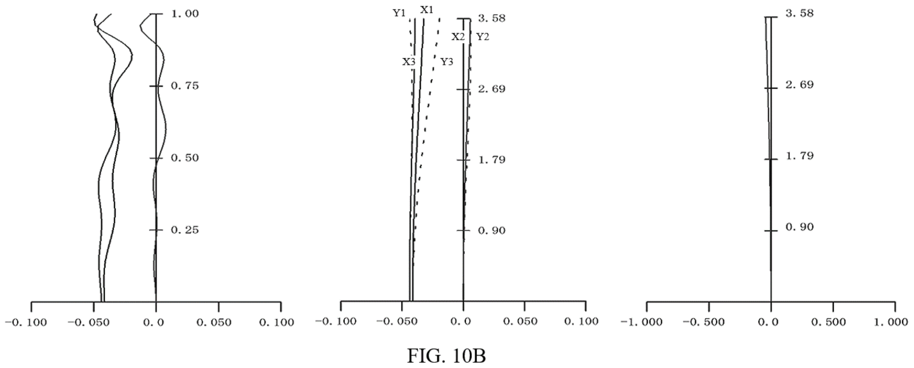

Refer to FIG. 10B. FIG. 10B is a diagram of a simulation effect of the camera module 200 shown in FIG. 10A in a possible embodiment.

FIG. 10B includes an axial chromatic aberration curve, an astigmatism and field curvature curve, and a distortion curve. The axial chromatic aberration curve indicates a deviation of a convergence point after light of different wavelengths passes through lenses of an optical system. A reference wavelength of the axial chromatic aberration curve is 486.1 nm, 587.6 nm, or 656.3 nm. A physical meaning of the axial chromatic aberration curve is a deviation relative to an ideal image point after light of a corresponding wavelength emitted from a 0-degree field of view passes through the optical lens 10. A horizontal coordinate of the axial chromatic aberration curve is a deviation value in a direction of the optical axis O, and a vertical coordinate of the axial chromatic aberration curve is a normalized coordinate at a pupil. Values in FIG. 10B are all small, and axial aberrations (a spherical aberration, a chromatic aberration, and the like) of the optical lens 10 is well corrected. The astigmatism and field curvature curve indicates meridional image plane bending and sagittal image plane bending, and indicates a deviation between a convergence point of fine light beams in different fields of view and an ideal imaging plane, where a solid line is a light beam in a meridional direction, and a dashed line is a light beam in a sagittal direction. A horizontal coordinate of the astigmatism and field curvature curve is a deviation value in a direction of the optical axis O, and a vertical coordinate of the astigmatism and field curvature curve is a corresponding field of view. A reference wavelength of the astigmatism and field curvature curve may be 486.1 nm, 587.6 nm, or 656.3 nm. When a value of a field of view is excessively large, image quality of the field of view is poor or a high-order aberration exists. As shown in FIG. 10B, field curvatures in the two directions are small, and the system has a good depth of focus. The distortion curve represents a relative deviation between a convergence point (an actual image height) of light beams in different fields of view and an ideal image height. A reference wavelength of the distortion curve may be 486.1 nm, 587.6 nm, or 656.3 nm, and is within 1% shown in FIG. 10B, so that it can be ensured that there is no obvious distortion in a picture. It can be learned from FIG. 10B that the camera module 200 provided in this embodiment can implement good imaging quality. In FIG. 10B, because the distortion curve is very close to the vertical coordinate, the distortion curve partially coincides with the vertical coordinate in the figure.

In the camera module 200 provided in this embodiment, when an object distance is infinite, a field of view FOV of the optical lens 10 of the camera module 200 is 10.17°, an effective focal length EFL is 40.28 mm, a total track length TTL of the optical lens 10 is 53.87 mm, and a total optical path length PL of the optical folding element 2 is 47.9 mm. One deflection reflection and seven folding reflections of light occur in the optical folding element 2, so that the optical lens 10 has features of a long focal length and miniaturization, and the camera module 200 can have good imaging quality.

All the foregoing accompanying drawings are examples of this application. The accompanying drawings mainly show parts of a product related to an implementation of this application. The product may still include another part that is not shown in the accompanying drawings. In addition, actual shapes, actual positions, actual sizes and proportions, actual structures, an actual quantity, and the like of components or structures of the product are not limited by the accompanying drawings.

The foregoing implementations are intended for describing the technical solutions of this application, but not for limiting this application. Although this application is described in detail with reference to the foregoing implementations, a person of ordinary skilled in the art should understand that modifications may still be made to the technical solutions described in the foregoing implementations or equivalent replacements may be made to some technical features, and such modifications or replacements do not cause the essence of the corresponding technical solutions to depart from the scope of the technical solutions of implementations of this application.

Implementations of this application or features in implementations may be combined with each other if there is no conflict, and any combination of features in different implementations also falls within the protection scope of this application. In other words, the plurality of implementations described above may alternatively be combined according to an actual requirement.

**Claims**

1. An optical lens (10), comprising a lens group (1) and an optical folding element (2), wherein

   the lens group (1) comprises at least one lens having a positive focal power;
   the optical folding element (2) is located on an image side of the lens group (1), the optical folding element (2) comprises a first part (2a), a second part (2b), and a third part (2c) that are sequentially connected from an object side to the image side, the first part (2a) extends in a first direction, the third part (2c) extends in a second direction, a plane in which the first direction and the second direction are located is perpendicular to an optical axis (O) of the lens group (1), and the second direction intersects with the first direction;

the optical folding element (2) comprises an incident surface (21), a deflection reflection surface (23), and an emergent surface (22), wherein the incident surface (21) is located in the first part (2a) and is disposed facing the lens group (1), the deflection reflection surface (23) is located in the second part (2b) and is parallel to the optical axis (O) of the lens group (1), and the emergent surface (22) is located in the third part (2c); and

after passing through the lens group (1), external light is emitted into the optical folding element (2) through the incident surface (21), and after being subject to at least six reflections in the optical folding element (2), the external light is emitted out of the optical folding element (2) through the emergent surface (22), wherein the at least six reflections comprise one reflection occurring on the deflection reflection surface (23).

2. The optical lens (10) according to claim 1, wherein a first included angle $\alpha$ is formed between the first direction and the second direction, and the first included angle $\alpha$ satisfies:
$50° \leq \alpha \leq 150°$ or $70° \leq \alpha \leq 135°$.

3. The optical lens (10) according to claim 1 or 2, wherein the optical axis (O) of the lens group (1) intersects with the incident surface (21) at the first position (P1), an extension line of the first position (P1) in the first direction intersects with the deflection reflection surface (23) at a second position (P2), light emergent through the emergent surface (22) has an emergent optical axis (O'), the emergent optical axis (O') is parallel to the optical axis (O) of the lens group (1), and the emergent optical axis (O') intersects with the emergent surface (22) at a third position (P3); and

a first spacing S1 between the first position (P1) and the second position (P2) and a second spacing S2 between the second position (P2) and the third position (P3) satisfy:
$13$ mm $\leq$ S1+S2 $\leq 47$ mm, or $17.5$ mm $\leq$ S1+S2 $\leq 42.5$ mm.

4. The optical lens (10) according to claim 1 or 2, wherein the optical axis (O) of the lens group (1) intersects with the incident surface (21) at the first position (P1), an extension line of the first position (P1) in the first direction intersects with the deflection reflection surface (23) at a second position (P2), light emergent through the emergent surface (22) has an emergent optical axis (O'), the emergent optical axis (O') is parallel to the optical axis (O) of the lens group (1), and the emergent optical axis (O') intersects with the emergent surface (22) at a third position (P3); and a first spacing S1 between the first position (P1) and the second position (P2), a second spacing S2 between the second position (P2) and the third position (P3), and a third spacing S3 between the first position (P1) and the third position (P3) in the first direction satisfy:

S3 $\leq$ S1, and $50\% \leq$ S1/(S1+S2) $\leq 90\%$, or $50\% \leq$ S1/(S1+S2) $\leq 80\%$; or
S1 $\leq$ S3, and $50\% \leq$ S3/(S1+S2) $\leq 90\%$, or $50\% \leq$ S3/(S1+S2) $\leq 80\%$.

5. The optical lens (10) according to any one of claims 1 to 4, wherein the optical folding element (2) comprises a top surface (22) and a bottom surface (25) that are disposed in parallel, an arrangement direction of the top surface (22) and the bottom surface (25) is parallel to the optical axis (O) of the lens group (1), the incident surface (21) is located on the top surface (22), and the emergent surface (22) is located on the top surface (22) or the bottom surface (25);

the deflection reflection surface (23) connects the top surface (22) to the bottom surface (25); the optical folding element (2) further comprises a first reflective surface (26) and a second reflective surface (27), wherein the first reflective surface (26) is located in the first part (2a) and connects the top surface (22) and the bottom surface (25), and the second reflective surface (27) is located in the third part (2c) and connects the top surface (22) to the bottom surface (25); and

after light is emitted into the optical folding element (2), a first reflection occurs on the first reflective surface (26), at least three reflections occur on the top surface (22) and the bottom surface (25), and a last reflection occurs on the second reflective surface (27).

6. The optical lens (10) according to claim 5, wherein a second included angle $\beta$ is formed between the first reflective surface (26) and the incident surface (21), and the second included angle $\beta$ satisfies:
$22° \leq \beta \leq 40°$ or $25° \leq \beta \leq 37°$.

7. The optical lens (10) according to any one of claims 1 to 6, wherein a field of view FOV of the optical lens (10) satisfies:

FOV≤30°, or FOV≤20°.

8. The optical lens (10) according to any one of claims 1 to 7, wherein an effective focal length EFL of the optical lens (10) satisfies:
20 mm≤EFL≤60 mm, or 30 mm≤EFL≤50 mm.

9. The optical lens (10) according to any one of claims 1 to 8, wherein a total track length TTL and the effective focal length EFL of the optical lens (10) satisfy:
0.7≤TTL/EFL≤1.8, or 0.9≤TTL/EFL≤1.5.

10. The optical lens (10) according to any one of claims 1 to 9, wherein a total optical path length PL and the effective focal length EFL of the optical folding element (2) satisfy:
0.5≤PL/EFL≤1.5.

11. The optical lens (10) according to any one of claims 1 to 10, wherein the lens group (1) comprises a first lens closest to the object side, and a focal length F1 of the first lens and the effective focal length EFL of the optical lens (10) satisfy:
0.2<F1/EFL<0.7, or 0.25≤F1/EFL≤0.5.

12. A camera module (200), comprising an image sensor (20) and the optical lens (10) according to any one of claims 1 to 11, wherein the image sensor (20) is located on an image side of the optical lens (10).

13. The camera module (200) according to claim 12, wherein in a focusing process of the camera module (200), the lens group (1), at least one lens in the lens group (1), or the image sensor (20) moves in a direction parallel to an optical axis (O) of the lens group (1).

14. The camera module (200) according to claim 12 or 13, wherein in an image stabilization process of the camera module (200), the lens group (1), the at least one lens in the lens group (1), or the image sensor (20) moves in a plane perpendicular to the optical axis (O) of the lens group (1).

15. An electronic device (1000), comprising an image processor (300) and the camera module (200) according to any one of claims 12 to 14, wherein the image processor (300) is in communication connection to the camera module (200), and the image processor (300) is configured to: obtain image data from the camera module (200) and process the image data.

FIG. 1

FIG. 2

FIG. 3

FIG. 4

FIG. 5A

FIG. 5B

FIG. 5C

FIG. 6

200

FIG. 7A

2

FIG. 7B

200

FIG. 8A

FIG. 8B

FIG. 9A

FIG. 9B

FIG. 10A

FIG. 10B

## INTERNATIONAL SEARCH REPORT

| International application No. |
| --- |
| **PCT/CN2024/100072** |

| A. | CLASSIFICATION OF SUBJECT MATTER |
| --- | --- |

G02B13/00(2006.01)i; G02B17/04(2006.01)i; G03B17/17(2021.01)i

According to International Patent Classification (IPC) or to both national classification and IPC

| B. | FIELDS SEARCHED |
| --- | --- |

Minimum documentation searched (classification system followed by classification symbols)

IPC: G02B G03B

Documentation searched other than minimum documentation to the extent that such documents are included in the fields searched

Electronic data base consulted during the international search (name of data base and, where practicable, search terms used)

CNTXT, CNKI, ENTXTC, WPABS, DWPI: 反射, 反光, 棱镜, 折叠, 调节, 调整, 后焦距, 后焦长, 小型, 尺寸, 长度, reflect, prism, fold, back focal length, size, miniaturization

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111399186 A (NANCHANG O-FILM PRECISION OPTICAL PRODUCT CO., LTD.) 10 July 2020 (2020-07-10)<br>description, paragraphs 0088-0095, and figures 6-7 | 1-15 |
| A | CN 116266007 A (NINGBO SUNNY OPTICAL TECHNOLOGY CO., LTD.) 20 June 2023 (2023-06-20)<br>entire document | 1-15 |
| A | CN 219370111 U (KUNSHAN Q TECHNOLOGY CO., LTD.) 18 July 2023 (2023-07-18)<br>entire document | 1-15 |
| A | US 2023113899 A1 (SAMSUNG ELECTRO-MECHANICS CO., LTD.) 13 April 2023 (2023-04-13)<br>entire document | 1-15 |
| A | CN 111025600 A (ZHEJIANG SUNNY OPTICS CO., LTD.) 17 April 2020 (2020-04-17)<br>entire document | 1-15 |
| A | JP 2006154705 A (KONICA MINOLTA OPTO, INC.) 15 June 2006 (2006-06-15)<br>entire document | 1-15 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 August 2024** | **03 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/100072**

| Patent document cited in search report | | | Publication date (day/month/year) | Patent family member(s) | | | Publication date (day/month/year) |
|---|---|---|---|---|---|---|---|
| CN | 111399186 | A | 10 July 2020 | None | | | |
| CN | 116266007 | A | 20 June 2023 | None | | | |
| CN | 219370111 | U | 18 July 2023 | None | | | |
| US | 2023113899 | A1 | 13 April 2023 | None | | | |
| CN | 111025600 | A | 17 April 2020 | US | 2021199936 | A1 | 01 July 2021 |
| | | | | US | 11656445 | B2 | 23 May 2023 |
| | | | | US | 2023251474 | A1 | 10 August 2023 |
| | | | | US | 12044834 | B2 | 23 July 2024 |
| JP | 2006154705 | A | 15 June 2006 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311136594